(19) Europäisches Patentamt
European Patent Office
Office européen des brevets

(11) EP 3 766 912 A1

(12) **EUROPEAN PATENT APPLICATION**
published in accordance with Art. 153(4) EPC

(43) Date of publication:
**20.01.2021 Bulletin 2021/03**

(21) Application number: **19767338.7**

(22) Date of filing: **14.03.2019**

(51) Int Cl.:
***C08G 59/32*** *(2006.01)* ***C08J 5/24*** *(2006.01)*

(86) International application number:
**PCT/JP2019/010715**

(87) International publication number:
**WO 2019/177131 (19.09.2019 Gazette 2019/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.03.2018 JP 2018050276**
**16.03.2018 JP 2018050277**
**16.03.2018 JP 2018050278**
**27.07.2018 JP 2018140958**

(71) Applicant: **Teijin Limited**
**Osaka 530-0005 (JP)**

(72) Inventors:
- **OZAWA, Suguru**
**Osaka-shi, Osaka 530-0005 (JP)**
- **KAWAMOTO, Hironori**
**Osaka-shi, Osaka 530-0005 (JP)**
- **SUZUKI, Takaya**
**Osaka-shi, Osaka 530-0005 (JP)**
- **KUWAHARA, Hiroaki**
**Osaka-shi, Osaka 530-0005 (JP)**
- **KANEKO, Toru**
**Osaka-shi, Osaka 530-0005 (JP)**

(74) Representative: **Cockerton, Bruce Roger**
**Carpmaels & Ransford LLP**
**One Southampton Row**
**London WC1B 5HA (GB)**

(54) **EPOXY RESIN COMPOSITION, PREPREG, FIBER-REINFORCED COMPOSITE MATERIAL, AND PRODUCTION METHODS THEREFOR**

(57) The present invention provides an epoxy resin composition including tetraglycidyl-3,4'-diaminodiphenyl ether, and a curing agent composed of an aromatic polyamine having a predetermined substituent in at least one ortho position with respect to an amino group, a predetermined aromatic epoxy resin having a glycidyl ether group, or an epoxy resin having a predetermined epoxy equivalent weight.

EP 3 766 912 A1

## Description

### Technical Field

The present invention relates to an epoxy resin composition, a prepreg, a fiber-reinforced composite material, and production methods therefor. More specifically, it relates to an epoxy resin composition which gives a resin cured product having high elastic modulus, high water absorption resistance, and high physical properties on water absorption, and has high handling properties; a prepreg produced by using the epoxy resin composition; and a fiber-reinforced composite material produced by using the epoxy resin composition.

### Background Art

A fiber-reinforced composite material (hereinafter it may be referred to as "FRP"), which has a light weight, high strength, and high rigidity, is used in a wide variety of fields including, for example, sports and leisure applications such as a fishing rod and a golf shaft and industrial applications such as an automobile and an aircraft. As a method for molding a composite material having a thermosetting resin as a matrix resin, a method of molding a prepreg (intermediate substrate) in which a fiber-reinforced substrate is impregnated with a resin and formed into a sheet shape in advance can be mentioned. Other molding methods include, for example, a resin transfer molding (RTM) method in which a fiber-reinforced substrate disposed in a mold is impregnated with a liquid resin composition and cured to obtain a fiber-reinforced composite material.

For producing an FRP, a method of using an intermediate material (prepreg) in which a fiber-reinforced substrate layer composed of a long fiber such as a reinforced fiber is impregnated with a resin is preferably used. A molded product formed from the FRP can be obtained by cutting the prepreg into a desired shape and then shaping the cut prepreg, followed by curing by heating and pressurizing.

In the field of aircraft, dynamic characteristics such as heat resistance and impact resistance are required to be high. In general, the prepreg using an epoxy resin can be used to obtain a molded product having high dynamic characteristics. However, the prepreg using an epoxy resin requires a long molding time. Further, the molded product obtained by curing the prepreg using an epoxy resin has insufficient water absorption resistance, thus, in some cases, dynamic characteristics such as heat resistance and impact resistance are reduced at the time of water absorption.

Press molding enabling a short-time molding usually uses high-temperature and high-pressure conditions of from 100 to 150°C and from 1 to 15 MPa (Patent Literature 1). These high-temperature and high-pressure conditions can shorten the curing time of the resin constituting the prepreg. Further, properly fluidizing the resin constituting the prepreg in the mold allows the gas included in the prepreg to be exhausted. However, when the press molding is performed under the high-temperature and high-pressure conditions, the increasing temperature of the resin constituting the prepreg significantly reduces the resin viscosity. As a result, the resin heavily flows out from a shear edge portion depending on the structure of the mold (hereinafter, a phenomenon in which the resin flows out from the inside of the prepreg by heating and pressurizing in the molding step is also referred to as "resin flow"). Thus, the obtained FRP has an appearance defect such as an unimpregnated portion with the resin composition (resin-starved portion) or fiber meandering, as well as a performance defect resulting therefrom.

Patent Literature 2 descries a method including using a high-viscosity epoxy resin and adding a thermoplastic resin to an epoxy resin as a method for reducing the resin flow. However, when the high-viscosity epoxy resin is used, the resin viscosity is also increased at normal temperature (25°C). This causes difficulty in laminating work and the like and significantly reduces handling properties of the prepreg.

Patent Literatures 3 to 5 describes a prepreg for high-cycle press molding in which handling properties of the prepreg at normal temperature is improved by reducing the resin flow without reducing Tg and the curing rate. The resin used in the prepreg described in Patent Literatures 3 to 5 is obtained by dissolving a thermoplastic resin in a liquid epoxy resin for increasing the resin viscosity. However, the resin viscosity also increases at the time of producing the prepreg, thus there is a case where impregnation of the fiber-reinforced substrate layer with the resin is reduced and a void is formed in the FRP after molding.

In the field of aircraft, dynamic characteristics such as heat resistance and impact resistance are required to be high, and various methods have been proposed for the purpose of improving impact resistance and interlaminar toughness. In particular, many techniques of absorbing destruction energy by disposing a material different from the matrix resin between layers have been proposed (Patent Literature 6). However, the curing time of the resin generally takes 120 minutes or more, making it difficult to perform the short-time molding.

Further, in Patent Literatures 1 to 6, there is no mention regarding water absorption resistance of the obtained FRP.

As a method for improving the impact resistance, the methods described in Patent Literatures 7 to 10 have been conventionally known.

Patent Literature 7 describes a method of providing toughness to a thermosetting resin by dissolving a thermoplastic resin in the thermosetting resin. This method can provide toughness to the thermosetting resin to some extent. However, a large amount of the thermoplastic resin needs to be dissolved in the thermosetting resin to provide high toughness. The thermosetting resin dissolving a large amount of the thermoplastic resin has a significant increase in viscosity, making it difficult to impregnate a reinforcing fiber substrate formed from a carbon fiber with a sufficient amount of the resin. The FRP produced by using such a prepreg includes many defects such as a void. As a result, compression performance and damage tolerance of an FRP structure are negatively affected.

Patent Literatures 8 to 10 describe prepregs in which thermoplastic resin fine particles are localized to the surface of the prepregs. These prepregs have low initial tack properties as the thermoplastic resins having a particle shape are localized to the surface of the prepregs. Further, a curing reaction with a curing agent present inside the surface layer proceeds, thus the storage stability is low, and tack properties and drape properties are reduced over time. Further, the FRP produced by using such a prepreg in which the curing reaction has proceeded includes many defects such as a void, causing a significant reduction in mechanical properties of the FRP structure.

Further, in recent years, attention has been given to the RTM method, which is a production method of low cost and excellent productivity, involving a smaller number of steps for producing a fiber-reinforced composite material and not requiring an expensive equipment such as an autoclave. A matrix resin composition used in the RTM method mainly includes an epoxy resin and a curing agent and optionally includes other additives. In the RTM method, an aromatic polyamine is generally used in order to obtain a cured product or a fiber-reinforced composite material having high dynamic physical properties.

In the epoxy resin composition used in the RTM method, the curing agent is often used in a state of being dissolved in the epoxy resin in order to prevent the curing agent from being filtered when the reinforcing fiber substrate is impregnated with the resin composition. During this process, the curing agent is in a state of being dissolved in the epoxy resin, thus a reaction between the epoxy resin and the curing agent relatively easily occurs, thereby causing a problem of shortening a pot life of the resin composition. Thus, as described in Patent Literature 11, a hindered amine-based curing agent having low reactivity is often used. However, when the hindered amine-based curing agent is used, dynamic physical properties of the obtained curing product and fiber-reinforced composite material tend to decrease as compared with a case of using a curing agent commonly used in a prepreg such as 3,3'-diaminodiphenyl sulfone.

## Citation List

### Patent Literature

Patent Literature 1: WO 2004/48435 A
Patent Literature 2: JP 2005-213352 A
Patent Literature 3: JP 2009-292976 A
Patent Literature 4: JP 2009-292977 A
Patent Literature 5: JP 2010-248379 A
Patent Literature 6: JP 2011-190430 A
Patent Literature 7: JP 60-243113 A
Patent Literature 8: JP H07- 41575 A
Patent Literature 9: JP H07- 41576 A
Patent Literature 10: JP H07- 41577 A
Patent Literature 11: JP 2014-148572 A


## Summary of Invention

### Technical Problem

An object of the present invention is to solve the aforementioned problems of the prior art by providing an epoxy resin composition, which can be used to produce a resin cured product having excellent characteristics, has high impregnation properties for a fiber-reinforced substrate, and is excellent in handling properties. Further, another object of the present invention is to provide a prepreg and a fiber-reinforced composite material (hereinafter also abbreviated as "FRP", in particular, in a case where the fiber-reinforced substrate is a carbon fiber, abbreviated as "CFRP") produced by using the epoxy resin composition.

## Solution to Problem

As a result of studies to solve the aforementioned problems, the present inventors have found that the aforementioned problems can be solved by using an epoxy resin composition including a combination of a predetermined epoxy resin and a predetermined curing agent, thereby completing the present invention.

The epoxy resin composition for achieving the object of the present invention is an epoxy resin of [1] described below.

[1] An epoxy resin composition including an epoxy resin [A] represented by the following Chemical Formula (1).

[Chemical Formula 1]

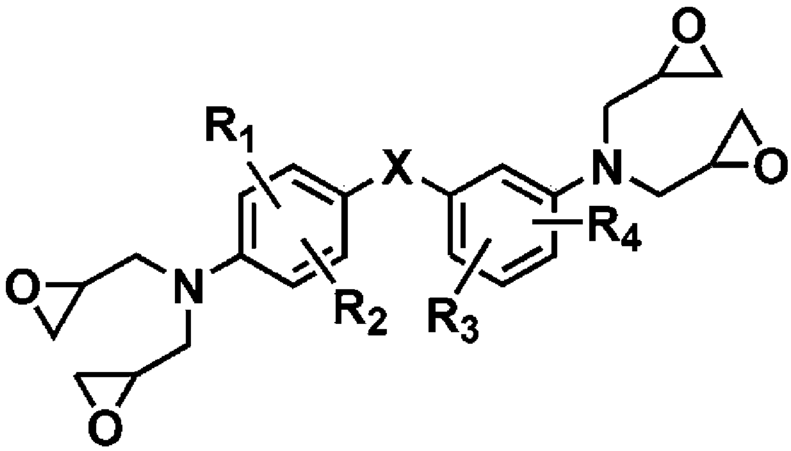

Chemical Formula (1)

In Chemical Formula (1), $R_1$ to $R_4$ each independently represent one selected from a group consisting of a hydrogen atom, an aliphatic hydrocarbon group, an alicyclic hydrocarbon group, and a halogen atom and X represents one selected from $-CH_2-$, -O-, -S-, -CO-, -C(=O)O-, -O-C(=O)-, - NHCO-, -CONH-, and $-SO_2-$.

The invention described in the above [1] is the epoxy resin composition including the predetermined epoxy resin [A] . Further, the preferable epoxy resin composition of the present invention is generally classified into the following three [2], [6], and [9].

[2] An epoxy resin composition including:

an epoxy resin [A] represented by the following Chemical Formula (1); and

a curing agent [B] which is a curing agent composed of an aromatic polyamine, in which the aromatic polyamine has a substituent of any of an aliphatic substituent, an aromatic substituent, and a halogen atom in at least one ortho position with respect to an amino group.

[Chemical Formula 1]

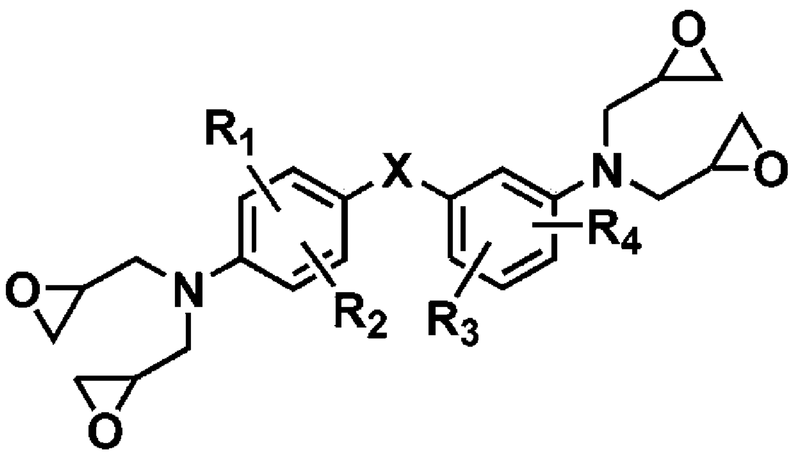

Chemical Formula (1)

In Chemical Formula (1), $R_1$ to $R_4$ each independently represent one selected from a group consisting of a hydrogen

atom, an aliphatic hydrocarbon group, an alicyclic hydrocarbon group, and a halogen atom and X represents one selected from $-CH_2-$, -O-, -S-, -CO-, -C(=O)O-, -O-C(=O)-, - NHCO-, -CONH-, and $-SO_2-$.
The invention described in the above [2] is the epoxy resin composition constituted by mixing the predetermined epoxy resin [A] with the predetermined curing agent [B]. The curing agent [B] is characterized by having the predetermined three-dimensional structure.
[3] The epoxy resin composition according to [2], in which the curing agent [B] is the curing agent composed of the aromatic polyamine and the aromatic polyamine has the aliphatic substituent in at least one ortho position with respect to the amino group.
[4] The epoxy resin composition according to [2] or [3], in which the curing agent [B] is a 4,4'-diaminodiphenylmethane derivative.
[5] The epoxy resin composition according to [2] or [3], in which the curing agent [B] is a phenylenediamine derivative.
[6] An epoxy resin composition including:

an epoxy resin [A] represented by the following Chemical Formula (1); and
an epoxy resin [C] which is an aromatic epoxy resin having a glycidyl ether group, in which the aromatic epoxy resin has a ratio of the number of glycidyl ethers/the number of aromatic rings of 2 or more.

[Chemical Formula 1]

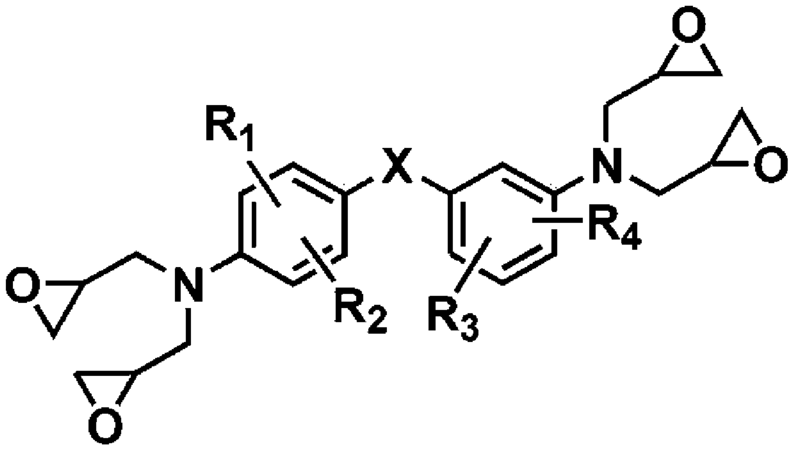

Chemical Formula (1)

In Chemical Formula (1), $R_1$ to $R_4$ each independently represent one selected from a group consisting of a hydrogen atom, an aliphatic hydrocarbon group, an alicyclic hydrocarbon group, and a halogen atom and X represents one selected from $-CH_2-$, -O-, -S-, -CO-, -C(=O)O-, -O-C(=O)-, - NHCO-, -CONH-, and $-SO_2-$.
The invention described in the above [6] is the epoxy resin composition constituted by mixing the predetermined epoxy resin [A] with the predetermined epoxy resin [C]. The epoxy resin [C] is characterized in that two or more glycidyl ethers are bonded to each aromatic ring.
[7] The epoxy resin composition according to [6], in which the epoxy resin [C] is resorcinol diglycidyl ether.
[8] The epoxy resin composition according to [6] or [7], in which a mass ratio between the epoxy resin [A] and the epoxy resin [C] is from 2:8 to 9:1.
[9] An epoxy resin composition including:

an epoxy resin [A] represented by the following Chemical Formula (1); and
an epoxy resin [D] having an epoxy equivalent weight of 110 g/eq or less.

[Chemical Formula 1]

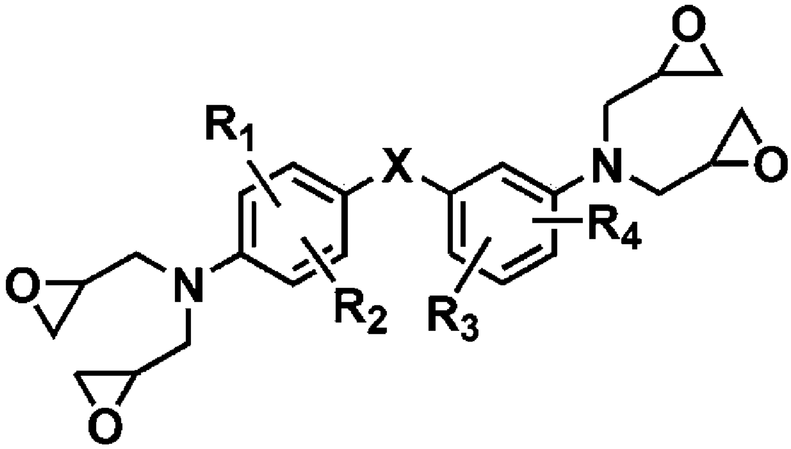

Chemical Formula (1)

In Chemical Formula (1), $R_1$ to $R_4$ each independently represent one selected from a group consisting of a hydrogen atom, an aliphatic hydrocarbon group, an alicyclic hydrocarbon group, and a halogen atom and X represents one selected from $-CH_2-$, -O-, -S-, -CO-, -C(=O)O-, -O-C(=O)-, - NHCO-, -CONH-, and $-SO_2-$.

The invention described in the above [9] is the epoxy resin composition constituted by mixing the predetermined epoxy resin [A] with the epoxy resin [D] having an epoxy equivalent weight of 110 g/eq or less.

[10] The epoxy resin composition according to [9], in which the epoxy resin [D] is a trifunctional epoxy resin.

[11] The epoxy resin composition according to [9], in which the epoxy resin [D] is a triglycidyl aminophenol derivative.

[12] The epoxy resin composition according to any one of [9] to [11], in which a content of the epoxy resin [A] is from 20 to 95% by mass with respect to a total amount of the epoxy resins and a content of the epoxy resin [D] is from 5 to 80% by mass with respect to the total amount of the epoxy resins.

[13] The epoxy resin composition according to any one of [1] to [12], in which the epoxy resin [A] is tetraglycidyl-3,4'-diaminodiphenyl ether.

[14] A prepreg including:

a fiber-reinforced substrate; and
the epoxy resin composition according to any one of [1] to [13], with which the fiber-reinforced substrate is impregnated.

[15] The prepreg according to [14], in which the reinforcing fiber substrate is formed from a carbon fiber.

[16] A method for producing a prepreg, in which a reinforcing fiber substrate is impregnated with the epoxy resin composition according to any one of [1] to [13].

[17] A fiber-reinforced composite material including a resin cured product prepared by curing the epoxy resin composition according to any one of [1] to [13] and a fiber-reinforced substrate.

[18] A method for producing a fiber-reinforced composite material, in which a fiber-reinforced substrate and the epoxy resin composition according to any one of [1] to [13] are composited and cured.

[19] A method for producing a fiber-reinforced composite material, in which the prepreg according to [14] or [15] is cured.

[20] A method for producing a fiber-reinforced composite material, in which the prepreg according to [14] or [15] is laminated and heated at a pressure of from 0.05 to 2 MPa and a temperature of from 150 to 210°C for from 1 to 8 hours.

## Advantageous Effects of Invention

The epoxy resin composition of the present invention can be used to produce the resin cured product having excellent characteristics. Further, the epoxy resin composition of the present invention, which has high impregnation properties for the fiber-reinforced substrate and high handling properties, can be used to produce the FRP having excellent characteristics.

## Description of Embodiments

Hereinafter, the epoxy resin composition, the prepreg, the fiber-reinforced composite material, and the production methods therefor of the present invention will be described in detail.

1. Epoxy resin composition

An epoxy resin composition of the present invention includes at least an epoxy resin [A]. Including the epoxy resin [A] makes it possible to obtain a cured product excellent in bending elastic modulus. Further, using such an epoxy resin composition makes it possible to obtain a fiber-reinforced composite material excellent in compression characteristics, impact resistance, and toughness.

The preferable epoxy resin composition of the present invention is generally classified into three described below.

- Epoxy resin composition (I)
- Epoxy resin composition (II)
- Epoxy resin composition (III)

Any epoxy resin composition of the present invention may include a thermosetting resin, a thermoplastic resin, a curing agent, and other additives in addition to the epoxy resin [A] and an essential component for each resin composition.

1-1. Epoxy resin composition (I)

Epoxy resin composition (I) includes at least the epoxy resin [A], and a curing agent [B] in which the aromatic polyamine has a substituent of any of an aliphatic substituent, an aromatic substituent, and a halogen atom in at least one ortho position with respect to an amino group.

The epoxy resin composition (I) of the present invention has the viscosity at 100°C of preferably from 0.1 to 500 Pa·s, more preferably from 1 to 100 Pa·s. When the viscosity is less than 0.1 Pa·s, the resin is easily flown out from the prepreg. When the viscosity is more than 500 Pa·s, an unimpregnated portion is easily generated in the prepreg. As a result, a void or the like tends to be formed in the obtained fiber-reinforced composite material.

A resin cured product obtained by curing the epoxy resin composition (I) of the present invention has a glass transition temperature at the time of water absorption of preferably 150°C or higher, more preferably from 170 to 400°C. When it is lower than 150°C, heat resistance is not sufficient.

The resin cured product obtained by curing the epoxy resin composition (I) of the present invention has the bending elastic modulus measured by the JIS K7171 method of preferably 3.0 GPa or more, more preferably from 3.5 to 30 GPa, further more preferably from 4.0 to 20 GPa. When it is less than 3.0 GPa, characteristics of the obtained fiber-reinforced composite material tend to decrease.

1-1-1. Epoxy resin [A]

Any of the epoxy resin compositions of the present invention includes the epoxy resin [A] represented by the following Chemical Formula (1).

[Chemical Formula 1]

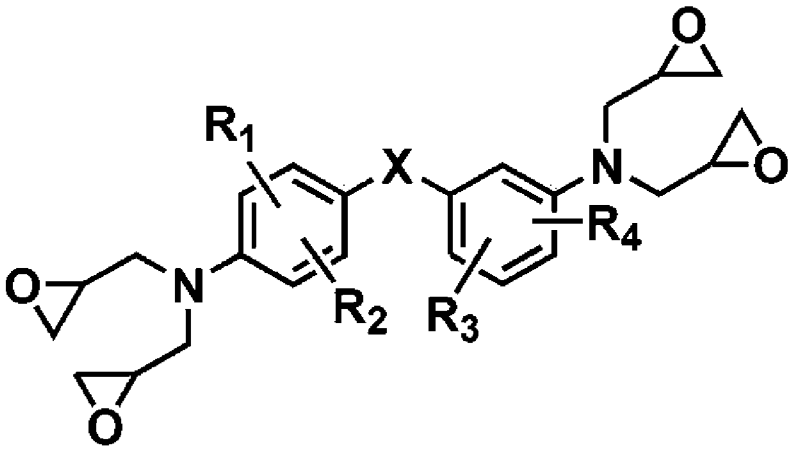

Chemical Formula (1)

In Chemical Formula (1), $R_1$ to $R_4$ each independently represent one selected from a group consisting of a hydrogen atom, an aliphatic hydrocarbon group, an alicyclic hydrocarbon group, and a halogen atom and X represents

one selected from $-CH_2-$, -O-, -S-, -CO-, -C(=O)O-, -O-C(=O)-, - NHCO-, -CONH-, and $-SO_2-$.

In a case where $R_1$ to $R_4$ are an aliphatic hydrocarbon group or an alicyclic hydrocarbon group, the number of carbon atoms thereof is preferably from 1 to 4.

In the epoxy resin [A], two aromatic rings are bonded to each other via an X group, and a diglycidyl group is boded to each of the aromatic rings. Of these, in one aromatic ring, the X group and the diglycidyl group are bonded in the para position, while, in the other aromatic ring, the X group and the diglycidyl group are bonded in the meta position. The present inventors speculate that elastic modulus and heat resistance of the resin cured product are increased due to a special three-dimensional structure of the resin cured product caused by this structure.

Examples of such an epoxy resin [A] include compounds represented by the following Chemical Formulae (2) to (4).

[Chemical Formula 2]

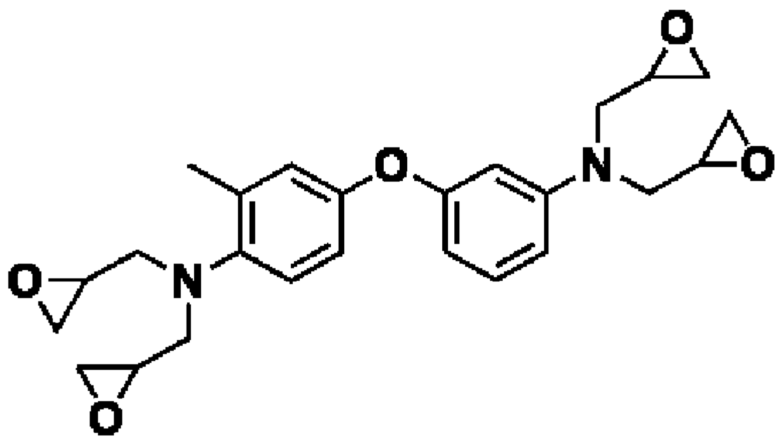

Chemical Formula (2)

[Chemical Formula 3]

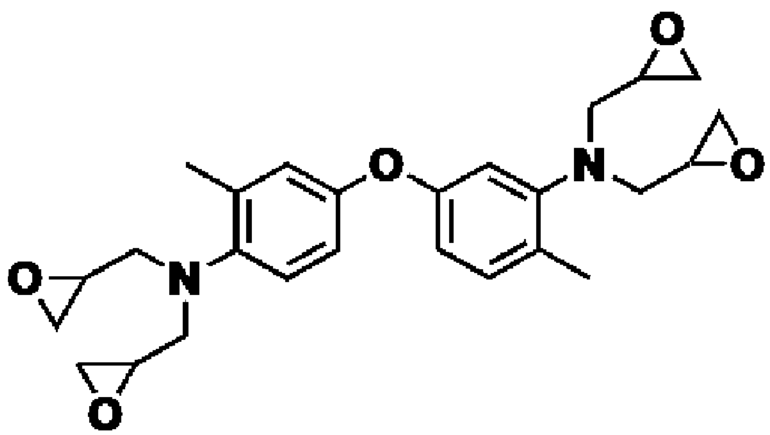

Chemical Formula (3)

[Chemical Formula 4]

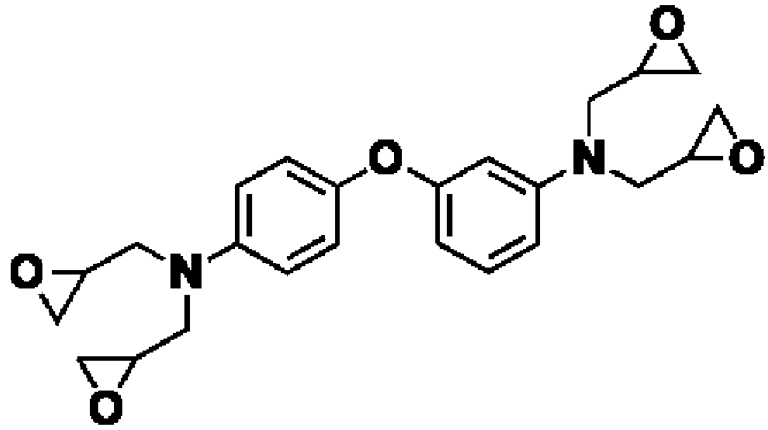

Chemical Formula (4)

Such an epoxy resin [A] may be synthesized by any method. For example, it can be obtained by reacting, as a raw material, an aromatic diamine compound and an epihalohydrin such as epichlorohydrin to obtain a tetrahalohydrin product, followed by a cyclization reaction using an alkaline compound. More specifically, it can be synthesized by the method in Example described below.

The aromatic diamine as a raw material may be any aromatic diamine having a structure in which two aromatic rings each having an amino group are bonded through an ether bond, one amino group is located in the para position, while the other amino group is located in the ortho position, with respect to the ether bond, and at least one substituent other than a hydrogen atom is bonded to at least one aromatic ring in the ortho position with respect to the amino group.

Examples of such an aromatic diamine having one substituent include 3,4'-diamino-3'-methyldiphenyl ether, 3,4'-diamino-3'-ethyldiphenyl ether, 3,4'-diamino-3'-isopropyldiphenyl ether, 3,4'-diamino-3'-tert-butyldiphenyl ether, 3,4'-diamino-3'-fluorodiphenyl ether, 3,4'-diamino-3'-chlorodiphenyl ether, 3,4'-diamino-2-methyldiphenyl ether, 3,4'-diamino-2-ethyldiphenyl ether, 3,4'-diamino-2-isopropyldiphenyl ether, 3,4'-diamino-2-tert-butylphenyl ether, 3,4'-diamino-4-methyldiphenyl ether, 3,4'-diamino-4-ethyldiphenyl ether, 3,4'-diamino-4-isopropyldiphenyl ether, and 3,4'-diamino-4-tert-butylphenyl ether.

Further, examples of the aromatic diamine having two substituents include 3,4'-diamino-3',5'-dimethylphenyl ether, 3,4'-diamino-3',5'-diethylphenyl ether, 3,4'-diamino-3',5'-diisopropylphenyl ether, 3,4'-diamino-3',5'-di-tert-butylphenyl ether, 3,4'-diamino-3'-ethyl-5'-methylphenyl ether, 3,4'-diamino-2,3'-dimethylphenyl ether, 3,4'-diamino-3'-ethyl-2-methylphenyl ether, 3,4'-diamino-3'-isopropyl-2-methylphenyl ether, 3,4'-diamino-2-methyl-3'-tert-butylphenyl ether, 3,4'-diamino-3'-fluoro-2-methylphenyl ether, 3,4'-diamino-3'-chloro-2-methylphenyl ether, 3,4'-diamino-2-methyl-3'-methylphenyl ether, 3,4'-diamino-2,3'-diethylphenyl ether, 3,4'-diamino-2-ethyl-3'-isopropylphenyl ether, 3,4'-diamino-2-ethyl-3'-tert-butylphenyl ether, 3,4'-diamino-2-ethyl-3'-fluorophenyl ether, 3,4'-diamino-3'-chloro-2-ethylphenyl ether, 3,4'-diamino-2-isopropyl-3'-methylphenyl ether, 3,4'-diamino-3'-ethyl-2-isopropylphenyl ether, 3,4'-diamino-2,3'-diisopropylphenyl ether, 3,4'-diamino-2-isopropyl-3'-tert-butylphenyl ether, 3,4'-diamino-3'-fluoro-2-isopropylphenyl ether, 3,4'-diamino-3'-chloro-2-isopropylphenyl ether, 3,4'-diamino-3'-methyl-2-tert-butylphenyl ether, 3,4'-diamino-3'-ethyl-2-tert-butylphenyl ether, 3,4'-diamino-3'-isopropyl-2-tert-butylphenyl ether, 3,4'-diamino-2,3'-di-tert-butylphenyl ether, 3,4'-diamino-3'-fluoro-2-tert-butylphenyl ether, 3,4'-diamino-3'-chloro-2-tert-butylphenyl ether, 3,4'-diamino-3',4-dimethylphenyl ether, 3,4'-diamino-3'-ethyl-4-methylphenyl ether, 3,4'-diamino-3'-isopropyl-4-methylphenyl ether, 3,4'-diamino-4-methyl-3'-tert-butylphenyl ether, 3,4'-diamino-3'-fluoro-4-methylphenyl ether, 3,4'-diamino-3'-chloro-4-methylphenyl ether, 3,4'-diamino-4-ethyl-3'-methylphenyl ether, 3,4'-diamino-3',4-diethylphenyl ether, 3,4'-diamino-4-ethyl-3'-isopropylphenyl ether, 3,4'-diamino-4-ethyl-3'-tert-butylphenyl ether, 3,4'-diamino-4-ethyl-3'-fluorophenyl ether, 3,4'-diamino-3'-chloro-4-ethylphenyl ether, 3,4'-diamino-4-isopropyl-3'-methylphenyl ether, 3,4'-diamino-3'-ethyl-4-isopropylphenyl ether, 3,4'-diamino-3',4-diisopropylphenyl ether, 3,4'-diamino-4-isopropyl-3'-tert-butylphenyl ether, 3,4'-diamino-3'-fluoro-4-isopropylphenyl ether, 3,4'-diamino-3'-chloro-4-isopropylphenyl ether, 3,4'-diamino-3'-methyl-4-tert-butylphenyl ether, 3,4'-diamino-3'-ethyl-4-tert-butylphenyl ether, 3,4'-diamino-3'-isopropyl-4-tert-butylphenyl ether, 3,4'-diamino-3',4-di-tert-butylphenyl ether, 3,4'-diamino-3'-fluoro-4-tert-butylphenyl ether, and 3,4'-diamino-3'-chloro-4-tert-butylphenyl ether.

Further, examples of the aromatic diamine having three substitutes include 3,4'-diamino-2,3',5'-trimethylphenyl ether, 3,4'-diamino-3',5'-diethyl-2-methylphenyl ether, 3,4'-diamino-3',5'-diisopropyl-2-methylphenyl ether, 3,4'-diamino-2-methyl-3',5'-di-tert-butylphenyl ether, 3,4'-diamino-3'-ethyl-2,5'-dimethylphenyl ether, 3,4'-diamino-2-ethyl-3',5'-dimethylphenyl ether, 3,4'-diamino-2,3',5'-triethylphenyl ether, 3,4'-diamino-2-ethyl-3',5'-diisopropylphenyl ether, 3,4'-diamino-2-ethyl-3',5'-di-tert-butylphenyl ether, 3,4'-diamino-2,3'-diethyl-5'-methylphenyl ether, 3,4'-diamino-2-isopropyl-3',5'-dimethylphenyl ether, 3,4'-diamino-3',5'-diethyl-2-isopropylphenyl ether, 3,4'-diamino-2,3',5'-triisopropylphenyl ether, 3,4'-diamino-2-ispropyl-3',5'-di-tert-butylphenyl ether, 3,4'-diamino-3'-ethyl-2-isopropyl-5'-methylphenyl ether, 3,4'-diamino-3',5'-dimethyl-2-tert-butylphenyl ether, 3,4'-diamino-3',5'-diethyl-2-tert-butylphenyl ether, 3,4'-diamino-3',5'-diisopropyl-2-tert-butylphenyl ether, 3,4'-diamino-2,3',5'-tri-tert-butylphenyl ether, 3,4'-diamino-3'-ethyl-5'-methyl-2-tert-butylphenyl ether, 3,4'-diamino-3',4,5'-trimethylphenyl ether, 3,4'-diamino-3',5'-diethyl-4-methylphenyl ether, 3,4'-diamino-3',5'-diisopropyl-4-methylphenyl ether, 3,4'-diamino-4-methyl-3',5'-di-tert-butylphenyl ether, 3,4'-diamino-3'-ethyl-4,5'-dimethylphenyl ether, 3,4'-diamino-4-ethyl-3',5'-dimethylphenyl ether, 3,4'-diamino-3',4,5'-triethylphenyl ether, 3,4'-diamino-4-ethyl-3',5'-diisopropylphenyl ether, 3,4'-diamino-4-ethyl-3',5'-di-tert-butylphenyl ether, 3,4'-diamino-3',4-diethyl-5'-methylphenyl ether, 3,4'-diamino-4-isopropyl-3',5'-dimethylphenyl ether, 3,4'-diamino-3',5'-diethyl-4-isopropylphenyl ether, 3,4'-diamino-3',4,5'-triisopropylphenyl ether, 3,4'-diamino-4-isopropyl-3',5'-di-tert-butylphenyl ether, 3,4'-diamino-3'-ethyl-4-isopropyl-5'-methylphenyl ether, 3,4'-diamino-3',5'-dimethyl-4-tert-butylphenyl ether, 3,4'-diamino-3',5'-diethyl-4-tert-butylphenyl ether, 3,4'-diamino-3',5'-diisopropyl-4-tert-butylphenyl ether, 3,4'-diamino-3',4,5'-tri-tert-butylphenyl ether, and 3,4'-diamino-3'-ethyl-5'-methyl-4-tert-butylphenyl ether.

Examples of the epihalohydrin include epichlorohydrin, epibromohydrine, and epifluorohydrin. Of these, epichlorohydrin and epibromohydrine are particularly preferable from the standpoints of reactivity and handling properties.

The mass ratio between the aromatic diamine and the epihalohydrin is preferably from 1:1 to 1:20, more preferably from 1:3 to 1:10. Examples of a solvent used at the time of the reaction include an alcohol solvent such as ethanol or n-butanol, a ketone solvent such as methyl isobutyl ketone or methyl ethyl ketone, an aprotic polarity solvent such as acetonitrile or N,N-dimethylformamide, and an aromatic hydrocarbon solvent such as toluene or xylene. An alcohol solvent such as ethanol or n-butanol and an aromatic hydrocarbon solvent such as toluene or xylene are particularly preferable. The use amount of the solvent is preferably from 1 to 10 times in mass with respect to the aromatic diamine. As an acid catalyst, both a Bronsted acid and a Lewis acid can be preferably used. In particular, as the Bronsted acid, ethanol, water, and acetic acid are preferable, and, as the Lewis acid, titanium tetrachloride, lanthanum nitrate hexahydrate, and boron trifluoride diethyl ether complex are preferable.

The reaction time is preferably from 0.1 to 180 hours, more preferably from 0.5 to 24 hours. The reaction temperature is preferably from 20 to 100°C, more preferably from 40 to 80°C.

As the alkaline compound used at the time of the cyclization reaction, sodium hydroxide and potassium hydroxide can be exemplified. The alkaline compound may be added as a solid form or an aqueous solution.

A phase transfer catalyst may be used at the time of the cyclization reaction. Examples of the phase transfer catalyst include a quaternary ammonium salt such as tetramethylammonium chloride, tetraethylammonium bromide, benzyltriethylammonium chloride, or tetrabutylammonium hydrogen sulfate, a phosphonium compound such as tributylhexadecylphosphonium bromide or tributyldodecylphosphonium bromide, and a crown ether such as 18-crown-6-ether.

The epoxy resin [A] used in the present invention has the viscosity at 50°C of preferably less than 50 Pa·s, more preferably less than 10 Pa·s, further more preferably less than 5.0 Pa·s, particularly preferably less than 2.0 Pa·s.

As the epoxy resin [A], tetraglycidyl-3,4'-diaminodiphenyl ether is preferable. In a case where $R_1$ to $R_4$ are a hydrogen atom, formation of the special three-dimensional structure of the resin cured product is hardly obstructed, thus this case is preferable. Further, X is preferably -O- for facilitating the synthesis of the compound.

A ratio of the epoxy resin [A] with respect to the total amount of the epoxy resins in the epoxy resin composition (I) of the present invention is preferably from 20 to 100% by mass, more preferably from 40 to 100% by mass, further more preferably from 55 to 100% by mass. When the ratio is less than 20% by mass, heat resistance and elastic modulus of the obtained resin cured product may decrease. As a result, various physical properties of the obtained CFRP may decrease.

1-1-2. Curing agent [B]

The epoxy resin composition (I) of the present invention includes a curing agent [B] which is a curing agent composed of an aromatic polyamine, in which the aromatic polyamine has a substituent of any of an aliphatic substituent, an aromatic substituent, and a halogen atom in at least one ortho position with respect to an amino group. That is, the curing agent [B] is a compound represented by the following Formulae (5) and (6).

[Chemical Formula 5]

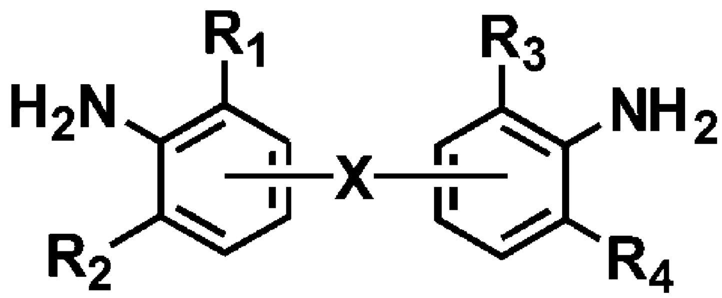

Chemical Formula (5)

In Chemical Formula (5), $R_1$ to $R_4$ each independently represent any of a hydrogen atom, an aliphatic substituent having from 1 to 6 carbon atoms, an aromatic substituent, and a halogen atom, at least one of the substituents is the aliphatic substituent having from 1 to 6 carbon atoms, the aromatic substituent, and the halogen atom. X represents any of $-CH_2-$, $-CH(CH_3)-$, $-C(CH_3)_2-$, -S-, -O-, $-SO_2-$, -CO-, -CONH-, -NHCO-, -C(=O)-, and -O-C(=O)-.

[Chemical Formula 6]

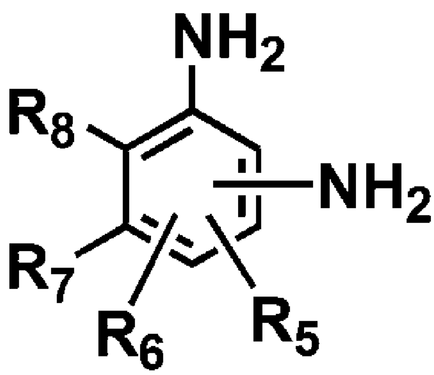

Chemical Formula (6)

In Chemical Formula (6), $R_5$ to $R_8$ each independently represent any of a hydrogen atom, an aliphatic substituent, an aromatic substituent, and a halogen atom, at least one of the substituents is the aliphatic substituent having from 1 to 6 carbon atoms, the aromatic substituent, and the halogen atom. The one of the substituents is preferably the aliphatic substituent having from 1 to 6 carbon atoms.

Note that, in Chemical Formulae (5) and (6), the number of carbon atoms of the aliphatic substituent is preferably from 1 to 6.

Examples of the aliphatic substituent include a methyl group, an ethyl group, a propyl group, an isopropyl group, an n-butyl group, a sec-butyl group, a tert-butyl group, an n-pentyl group, a neopentyl group, an n-hexyl group, and a cyclohexyl group.

Examples of the aromatic substituent include a phenyl group and a naphthyl group.

The curing agent [B] causes curing of the epoxy resin [A] and improves elastic modulus and water absorption resistance of the resin cured product. Thus, using the epoxy resin [A] and the curing agent [B] in combination can improve water absorption resistance while maintaining heat resistance and high elastic modulus.

The curing agent [B] may be any polyamine having the above structure. Specific examples thereof include 4,4'-diaminodiphenylmethane and a derivative thereof represented by the following Chemical Formulae (7) to (10); and phenylenediamine and a derivative thereof represented by the following Chemical Formulae (11) and (12).

[Chemical Formula 7]

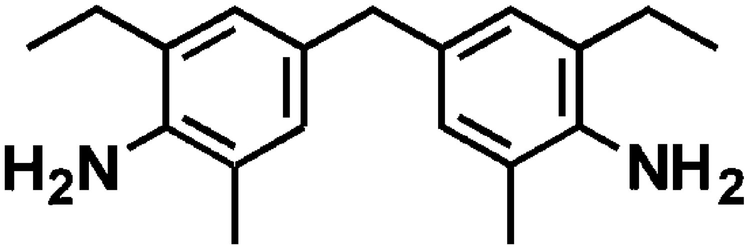

Chemical Formula (7)

[Chemical Formula 8]

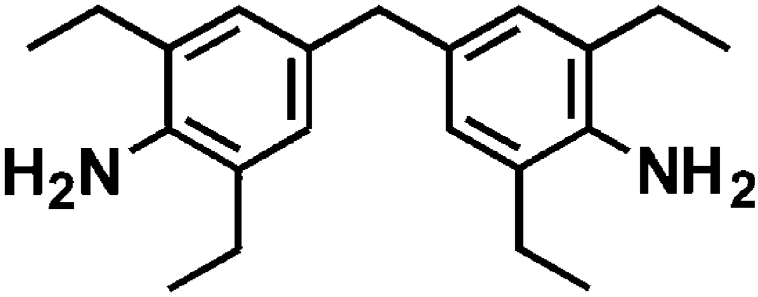

Chemical Formula (8)

[Chemical Formula 9]

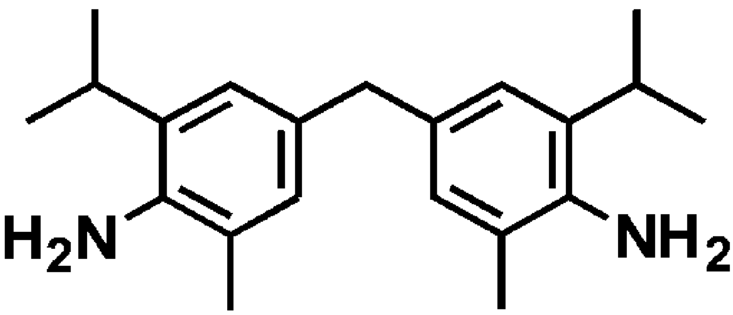

Chemical Formula (9)

[Chemical Formula 10]

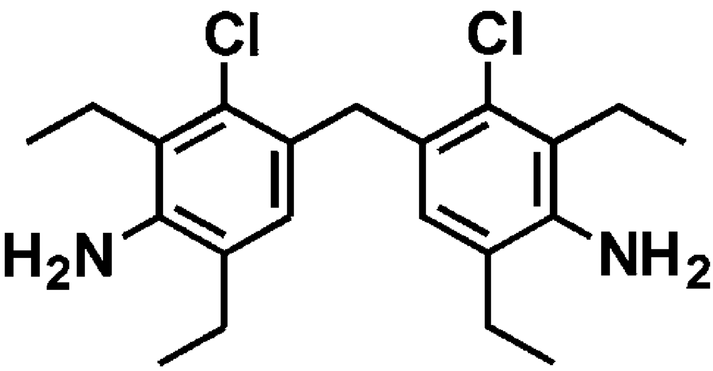

Chemical Formula (10)

[Chemical Formula 11]

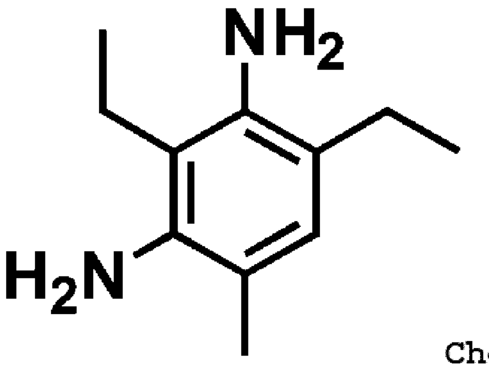

Chemical Formula (11)

[Chemical Formula 12]

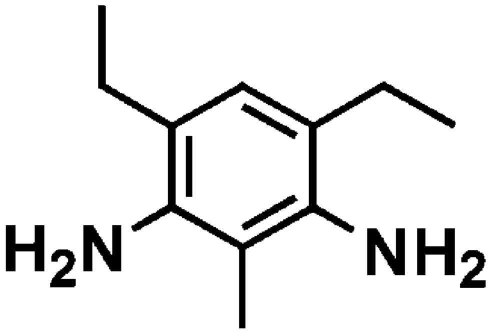

Chemical Formula (12)

The content of the curing agent [B] in the epoxy resin composition (I) of the present invention is preferably from 20 to 100 parts by mass, more preferably from 30 to 80 parts by mass, with respect to 100 parts by mass of the epoxy resin [A] included in the epoxy resin composition (I). When the content is less than 20 parts by mass, curing of the epoxy resin composition (I) becomes insufficient and physical properties of the resin cured product tend to decrease. When the content is more than 100 parts by mass, curing of the epoxy resin composition (I) becomes insufficient and mechanical properties of the resin cured product tend to decrease.

1-1-3. Other optional components

The epoxy resin composition (I) of the present invention requires the epoxy resin [A] and the curing agent [B] described above. However, it may also include other epoxy resins.

As other epoxy resin, a conventionally known epoxy resin can be used. Specifically, the epoxy resins exemplified as follows can be used. Of these, an epoxy resin having an aromatic group is preferable, and an epoxy resin having either a glycidyl amine structure or a glycidyl ether structure is preferable. Further, an alicyclic epoxy resin can be also suitably used.

Examples of the epoxy resin having a glycidyl amine structure include various isomers or the like of tetraglycidyldiaminodiphenylmethane, N,N,O-triglycidyl-p-aminophenol, N,N,O-triglycidyl-m-aminophenol, N,N,O-triglycidyl-3-methyl-4-aminophenol, and triglycidylaminocresol.

Examples of the epoxy resin having a glycidyl ether structure include a bisphenol A epoxy resin, a bisphenol F epoxy resin, a bisphenol S epoxy resin, a phenol novolac epoxy resin, and a cresol novolac epoxy resin.

Further, these epoxy resins may have a non-reactive substituent in an aromatic ring structure or the like as needed. Examples of the non-reactive substituent include an alkyl group such as methyl, ethyl, or isopropyl, an aromatic group such as phenyl, an alkoxyl group, an aralkyl group, and a halogen group or the like similarly to chlorine or bromine.

The epoxy resin composition (I) of the present invention may include other curing agents.

Examples of other curing agents include a latent curing agent such as dicyandiamide, an aliphatic polyamine, various isomers of an aromatic amine-based curing agent (excluding the above curing agent [B]), an aminobenzoic acid ester, and an acid anhydride.

Dicyandiamide is excellent in storage stability of the prepreg and thus preferable.

Examples of the aliphatic polyamine include 4,4'-diaminodicyclohexylmethane, isophoronediamine, and m-xylylenediamine.

The aromatic polyamine is excellent in heat resistance and various dynamic characteristics and is thus preferable. Examples of the aromatic polyamine include a diaminodiphenyl sulfone, a diaminodiphenylmethane, and a toluenediamine derivative. An aromatic diamine compound such as 4,4'-diaminodiphenyl sulfone, 3,3'-diaminodiphenyl sulfone, or 4,4'-diaminodiphenylmethane and a derivative thereof having a non-reactive substituent are particularly preferable as the cured product having high heat resistance can be obtained. Further, 3,3'-diaminodiphenyl sulfone is further preferable as the obtained resin cured product has high heat resistance and high elastic modulus. Examples of the non-reactive substituent include an alkyl group such as methyl, ethyl, or isopropyl, an aromatic group such as phenyl, an alkoxyl group, an aralkyl group, and a halogen group such as chlorine or bromine.

As the aminobenzoic acid ester, trimethylene glycol di-p-aminobenzoate and neopentyl glycol di-p-aminobenzoate are preferably used. The composite material cured by using these curing agents has lower heat resistance but higher tensile elongation as compared with the composite material cured by using various isomers of diaminodiphenyl sulfone.

Example of the acid anhydride include 1,2,3,6-tetrahydrophthalic anhydride, hexahydrophthalic anhydride, and 4-methylhexahydrophthalic anhydride. When these curing agents are used, it becomes possible to extend a pot life of the uncured resin composition and obtain a cured product having electrical properties, chemical properties, and mechanical properties in a relatively well-balanced manner. Thus, the curing agent is appropriately selected in accordance with the use of the composite material.

The total amount of the curing agents included in the epoxy resin composition (I) is an amount suitable for curing all of the epoxy resins blended in the epoxy resin composition and appropriately adjusted in accordance with the kinds of the epoxy resins and the curing agents in use. For example, in a case of using the aromatic diamine compound as a curing agent, the total amount of the curing agents is preferably from 25 to 65 parts by mass, more preferably from 35 to 55 parts by mass, with respect to 100 parts by mass of the total amount of the epoxy resins.

The epoxy resin composition (I) of the present invention may include a thermoplastic resin. As the thermoplastic resin, an epoxy resin-soluble thermoplastic resin and an epoxy resin-insoluble thermoplastic resin can be mentioned.

The epoxy resin-soluble thermoplastic resin adjusts the viscosity of the epoxy resin composition and improves impact resistance of the obtained FRP.

The epoxy resin-soluble thermoplastic resin refers to a thermoplastic resin which can be partially or entirely dissolved in an epoxy resin at a temperature equal to or lower than the molding temperature of the FRP. In this description, the phrase "partly dissolved in epoxy resin" means that, when 10 parts by mass of the thermoplastic resin having an average particle diameter of from 20 to 50 μm is mixed to 100 parts by mass of the epoxy resin and stirred at 190°C for 1 hour, the particles disappear or the size of the particles (particle diameter) changes by 10% or more.

On the other hand, the epoxy resin-insoluble thermoplastic resin means a thermoplastic resin which is not substantially dissolved in the epoxy resin at a temperature equal to or lower than the molding temperature of the FRP. That is, the epoxy resin-insoluble thermoplastic resin means a thermoplastic resin of which the particle size does not change by 10% or more when 10 parts by mass of the thermoplastic resin having an average particle diameter of from 20 to 50 μm is mixed to 100 parts by mass of the epoxy resin and stirred at 190°C for 1 hour. Note that the molding temperature of the FRP is generally from 100 to 190°C. Further, the particle diameter is visually measured using a microscope, and the average particle diameter means an average value of the particle diameters of 100 randomly selected particles.

When the epoxy resin-soluble thermoplastic resin is not completely dissolved, it is heated during the curing process of the epoxy resin to be dissolved in the epoxy resin, so that the viscosity of the epoxy resin composition can increase. This makes it possible to prevent outflow of the epoxy resin composition (a phenomenon in which the resin composition flows out of the prepreg) due to a decrease in the viscosity during the curing process.

The epoxy resin-soluble thermoplastic resin is preferably a resin which can be dissolved in the epoxy resin by 80% by mass or more at 190°C.

Specific examples of the epoxy resin-soluble thermoplastic resin include polyethersulfone, polysulfone, polyetherimide, and polycarbonate. These may be used alone, or two or more kinds may be used in combination. As the epoxy resin-soluble thermoplastic resin included in the epoxy resin composition, polyethersulfone and polysulfone, having the weight average molecular weight (Mw) measured by gel permeation chromatography in a range of from 8000 to 100000, are particularly preferable. When the weight average molecular weight (Mw) is smaller than 8000, there is a case where the impact resistance of the obtained FRP becomes insufficient, and when the Mw is more than 100000, there is a case where the viscosity significantly increases and handling properties are significantly deteriorated. The molecular weight distribution of the epoxy resin-soluble thermoplastic resin is preferably uniform. In particular, the polydispersity (Mw/Mn) that is a ratio of the weight average molecular weight (Mw) and the number average molecular weight (Mn) is preferably within a range of from 1 to 10, more preferably within a range of from 1.1 to 5.

The epoxy resin-soluble thermoplastic resin preferably has a reactive group having a reactivity or a functional

group which forms a hydrogen bond with an epoxy resin. Such an epoxy resin-soluble thermoplastic resin can improve the dissolution stability of the epoxy resin during the curing process. Further, toughness, chemical resistance, heat resistance, and moist heat resistance can be imparted to the FRP obtained after curing.

As the reactive group having a reactivity with an epoxy resin, a hydroxyl group, a carboxylic acid group, an imino group, an amino group, and the like are preferable. Using hydroxyl group-terminated polyethersulfone is more preferable as the obtained FRP exhibits particularly excellent impact resistance, fracture toughness, and solvent resistance.

The content of the epoxy resin-soluble thermoplastic resin included in the epoxy resin composition (I) is appropriately adjusted in accordance with the viscosity. From the standpoint of the processability of the prepreg, the content is preferably from 5 to 90 parts by mass, more preferably from 5 to 40 parts by mass, and further more preferably from 15 to 35 parts by mass, with respect to 100 parts by mass of the epoxy resin included in the epoxy resin composition (I). When the content is less than 5 parts by mass, there is a case where impact resistance of the obtained FRP becomes insufficient. When the content of the epoxy resin-soluble thermoplastic resin becomes high, there is a case where the viscosity significantly increases and handling properties of the prepreg are significantly deteriorated.

The epoxy resin-soluble thermoplastic resin preferably includes a reactive aromatic oligomer having an amine terminal group (hereinafter also simply referred to as an "aromatic oligomer").

The molecular weight of the epoxy resin composition is increased by a curing reaction of the epoxy resin and the curing agent at the time of heat curing. The increase in the molecular weight causes the expansion of a two-phase region. As a result, the aromatic oligomer dissolved in the epoxy resin composition undergoes a reaction-inducing phase separation. Due to this phase separation, a two-phase structure of resin in which the epoxy resin after curing and the aromatic oligomer are co-continuous is formed in a matrix resin. Further, the aromatic oligomer having an amine terminal group also causes a reaction with the epoxy resin. Each phase in this co-continuous two-phase structure is strongly bonded to each other, thus, the solvent resistance is also improved.

This co-continuous structure absorbs the impact on the FRP from the outside and thereby suppresses crack propagation. As a result, the FRP produced by using the prepreg that includes the reactive aromatic oligomer having an amine terminal group has high impact resistance and fracture toughness.

As the aromatic oligomer, known polysulfone having an amine terminal group or known polyethersulfone having an amine terminal group can be used. The amine terminal group is preferably a primary amine ($-NH_2$) terminal group.

The aromatic oligomer blended in the epoxy resin composition preferably has the weight average molecular weight measured by gel permeation chromatography of from 8000 to 40000. When the weight average molecular weight is less than 8000, the toughness improving effect of the matrix resin is low. Further, when the weight average molecular weight is more than 40000, the viscosity of the resin composition becomes extremely high, likely causing a problem in the processing such as a difficulty in performing impregnation of the reinforcing fiber layer with the resin composition.

As the aromatic oligomer, a commercially available product such as "Virantage DAMS VW-30500 RP (registered trademark)" (manufactured by Solvay Specialty Polymers) can preferably be used.

The form of the epoxy resin-soluble thermoplastic resin is not particularly limited. However, it preferably has a particulate shape. The epoxy resin-soluble thermoplastic resin having a particulate shape can be uniformly blended in the resin composition. Further, the obtained prepreg has high moldability.

The average particle diameter of the epoxy resin-soluble thermoplastic resin is preferably from 1 to 50 μm, particularly preferably from 3 to 30 μm. When it is less than 1 μm, the viscosity of the epoxy resin composition significantly increases. This sometimes makes it difficult to add a sufficient amount of the epoxy resin-soluble thermoplastic resin to the epoxy resin composition. When it is more than 50 μm, during processing of the epoxy resin composition into a sheet shape, it is sometimes difficult to obtain a sheet having a uniform thickness. Further, the dissolution rate to the epoxy resin becomes low and the obtained FRP becomes uneven, thus this case is not preferable.

In the epoxy resin composition, an epoxy resin-insoluble thermoplastic resin may be included other than the epoxy resin-soluble thermoplastic resin. The epoxy resin-insoluble thermoplastic resin or a part of epoxy resin-soluble thermoplastic resin (the epoxy resin-soluble thermoplastic resin remained without being dissolved in the matrix resin after curing) is turned into a state in which the particles thereof are dispersed in the matrix resin of the FRP (hereinafter, these dispersed particles are also referred to as "interlaminar particles"). The interlaminar particles suppress propagation of the impact given to the FRP. As a result, the impact resistance of the obtained FRP is improved.

Examples of the epoxy resin-insoluble thermoplastic resin include polyamide, polyacetal, polyphenylene oxide, polyphenylene sulfide, polyester, polyamideimide, polyimide, polyether ketone, polyether ether ketone, polyethylene naphthalate, polyether nitrile, and polybenzimidazole. Of these, polyamide, polyamideimide, and polyimide have high toughness and heat resistance and are thus preferable. Polyamide and polyimide are particularly excellent in the toughness improving effect of the FRP. These may be used alone, or two or more kinds may be used in combination. Further, a copolymer of these compounds can also be used.

In particular, heat resistance of the obtained FRP can be particularly improved by using an amorphous polyimide, a polyamide such as nylon 6 (registered trademark) (polyamide obtained by ring-opening polycondensation reaction of

caprolactam), nylon 11 (polyamide obtained by ring-opening polycondensation reaction of undecanelactam), nylon 12 (polyamide obtained by ring-opening polycondensation reaction of lauryl lactam), nylon 1010 (polyamide obtained by co-polycondensation reaction of sebacic acid and 1,10-decanediamine), or amorphous nylon (also called transparent nylon, in which crystallization of polymer does not occur, or crystallization rate of polymer is extremely low).

The content of the epoxy resin-insoluble thermoplastic resin in the epoxy resin composition is appropriately adjusted in accordance with the viscosity of the epoxy resin composition. The content is preferably from 5 to 50 parts by mass, more preferably from 10 to 45 parts by mass, further more preferably from 20 to 40 parts by mass, with respect to 100 parts by mass of the epoxy resin included in the epoxy resin composition from the standpoint of processability of the prepreg. When the content is less than 5 parts by mass, the impact resistance of the obtained FRP becomes insufficient in some cases. When the content is more than 50 parts by mass, impregnation of the epoxy resin composition, drape properties of the obtained prepreg, or the like reduces in some cases.

The preferable average particle diameter and form of the epoxy resin-insoluble thermoplastic resin are the same as those of the epoxy resin-soluble thermoplastic resin.

The epoxy resin composition of the present invention may be blended with an electroconductive particle, a flame retardant, an inorganic filler, and an internal mold release agent.

Examples of the electroconductive particle include an electroconductive polymer particle such as a polyacetylene particle, a polyaniline particle, a polypyrrole particle, a polythiophene particle, a polyisothianaphthene particle, or a polyethylenedioxythiophene particle; a carbon particle; a carbon fiber particle; a metal particle; and a particle of which a core material composed of an inorganic material or an organic material is coated with an electroconductive substance.

As the flame retardant, a phosphorus-based flame retardant is exemplified. The phosphorus-based flame retardant is not particularly limited as long as it includes a phosphorus atom in the molecule, and examples thereof include an organic phosphorus compound such as a phosphate ester, a condensed phosphate ester, a phosphazene compound, or a polyphosphate, and red phosphorus.

Examples of the inorganic filler include aluminum borate, calcium carbonate, silicon carbonate, silicon nitride, potassium titanate, basic magnesium sulfate, zinc oxide, graphite, calcium sulfate, magnesium borate, magnesium oxide, and a silicate mineral. A silicate mineral is particularly preferably used. As a commercially available product of the silicate mineral, THIXOTROPIC AGENT DT 5039 (manufactured by Huntsman-Japan KK) can be mentioned.

Examples of the internal mold release agent include a metal soap, plant wax such as polyethylene wax or carnauba wax, a fatty acid ester-based release agent, silicone oil, animal wax, and a fluorine-based nonionic surfactant. The blending amount of these internal mold release agents is preferably from 0.1 to 5 parts by mass, more preferably 0.2 to 2 parts by mass, with respect to 100 parts by mass of the epoxy resin. Within this range, the releasing effect from a mold is suitably exhibited.

Examples of a commercially available product of the internal mold release agent include "MOLD WIZ (registered trademark)" INT 1846 (manufactured by AXEL PLASTICS RESEARCH LABORATORIES Inc.), Licowax S, Licowax P, Licowax OP, Licowax PE 190, Licowax PED (manufactured by Clariant Japan K.K.), and stearyl stearate (SL-900 A; manufactured by Riken Vitamin Co., Ltd.).

1-2. Epoxy resin composition (II)

The epoxy resin composition (II) includes at least the epoxy resin [A] and an epoxy resin [C] which is an aromatic epoxy resin having a glycidyl ether group and has a ratio of the number of the glycidyl ethers/the number of the aromatic rings of 2 or more.

The preferable viscosity of the epoxy resin composition (II) of the present invention at 100°C is as described in the epoxy resin composition (I).

A resin cured product obtained by curing the epoxy resin composition (II) of the present invention has a glass transition temperature of preferably 150°C or higher, more preferably from 170 to 400°C. If it is lower than 150°C, heat resistance is not sufficient.

The bending elastic modulus of the resin cured product obtained by curing the epoxy resin composition (II) of the present invention measured by the JIS K 7171 method is as described in the epoxy resin composition (I).

1-2-1. Epoxy resin [A]

The epoxy resin [A] included in the epoxy resin composition (II) of the present invention is as described in the epoxy resin composition (I).

A ratio of the epoxy resin [A] with respect to the total amount of the epoxy resins in the epoxy resin composition (II) of the present invention is preferably from 20 to 95% by mass, more preferably from 40 to 60% by mass, further more preferably from 55 to 90% by mass. When the ratio is less than 20% by mass, heat resistance and elastic modulus of the obtained resin cured product may decrease. When the ratio is more than 95% by mass, the viscosity of the epoxy

resin composition becomes high and the impregnation properties for the reinforcing fiber substrate tends to decrease. As a result, in both cases, various physical properties of the obtained CFRP may decrease.

1-2-2. Epoxy resin [C]

The epoxy resin composition (II) of the present invention includes an epoxy resin [C] which is an aromatic epoxy resin having a glycidyl ether group, in which the aromatic epoxy resin has a ratio of the number of glycidyl ethers/the number of aromatic rings of 2 or more. The ratio of the number of the glycidyl ethers/the number of the aromatic rings is preferably 2. Note that, in the present invention, a condensed ring structure such as a naphthalene ring or an anthracene ring is considered as one aromatic ring.

The epoxy resin [C] reduces the viscosity of the epoxy resin [A], increases the resin impregnation properties during production of the prepreg, and increases elastic modulus of the resin cured product. Thus, using the epoxy resin [A] and the epoxy resin [C] in combination makes it possible to improve various physical properties of the FRP while maintaining heat resistance and high elastic modulus.

The epoxy resin [C] is not particularly limited as long as it is an epoxy resin having the ratio of the number of the glycidyl ethers/the number of the aromatic rings of 2 or more. However, a glycidyl ether epoxy resin such as o-hydroquinone, resorcinol, p-hydroquinone, or a derivative thereof is preferably used, and resorcinol and a derivative thereof are particularly preferably used.

The mass ratio of the epoxy resin [A] and the epoxy resin [C] in the epoxy resin composition (II) of the present invention is preferably from 2:8 to 9:1, more preferably from 4:6 to 9:1, further more preferably from 6:4 to 8:2. Blending in this ratio makes it possible to produce the epoxy resin composition (II) having the viscosity suitable for producing the prepreg and obtain the resin cured product having high crosslinking density.

The epoxy resin [C], which is a viscosity-reducing agent for reducing the viscosity of the epoxy resin [A], is used in combination with the epoxy resin [A] and the amine-based curing agent described below to give a resin cured product having high crosslinking density.

The epoxy resin composition (II) of the present invention requires two kinds of the epoxy resins described above, but it may also include other epoxy resins. Other epoxy resins are the same as described in the epoxy resin composition (I).

A ratio of the epoxy resin [A] and the epoxy resin [C] with respect to the total amount of the epoxy resins in the epoxy resin composition (II) of the present invention is preferably 50% by mass or more, more preferably 70% by mass or more.

1-2-3. Amine-based curing agent

The epoxy resin composition (II) of the present invention uses a known amine-based curing agent. Note that the epoxy resin composition (II) of the present invention may include this curing agent in advance or may not include this curing agent in advance. The epoxy resin composition (II) not including the curing agent is converted to a state of being mixable with the curing agent before or at the time of curing.

Examples of amine-based curing agents include a latent curing agent such as dicyandiamide, various isomers of an aliphatic polyamine and an aromatic amine-based curing agent, an aminobenzoic acid ester, and an acid anhydride.

Dicyandiamide is excellent in storage stability of the prepreg and thus preferable.

The aliphatic polyamine has high reactivity and allows a curing reaction at a low temperature, thus it is preferable. Examples of the aliphatic polyamine include 4,4'-diaminodicyclohexylmethane, isophoronediamine, and m-xylylenediamine.

The aromatic polyamine is excellent in heat resistance and various dynamic characteristics and is thus preferable. Examples of the aromatic polyamine include a diaminodiphenyl sulfone, a diaminodiphenylmethane, and a toluenediamine derivative. An aromatic diamine compound such as 4,4'-diaminodiphenyl sulfone, 3,3'-diaminodiphenyl sulfone, or 4,4'-diaminodiphenylmethane and a derivative thereof having a non-reactive substituent are particularly preferable from the standpoints of the cured product having excellent heat resistance can be given. The non-reactive substituent described herein is the same as described in the description of the epoxy resin. Further, in order to improve storage stability of the uncured epoxy resin composition and produce the resin cured product having excellent water absorption properties, a hindered amine-based compound such as 4,4'-methylenebis(2,6-diethylaniline, 4,4'-methylenebis(2-ethyl-6-methylaniline), or 4,4'-methylenebis(2-isopropyl-6-methylaniline) is also preferably used.

As the aminobenzoic acid ester, trimethylene glycol di-p-aminobenzoate and neopentyl glycol di-p-aminobenzoate are preferably used. While the composite material obtained by curing using these substances is inferior in heat resistance as compared with a case where various isomers of diaminodiphenylsulfone are used, it is excellent in tensile elongation.

Example of the acid anhydride include 1,2,3,6-tetrahydrophthalic anhydride, hexahydrophthalic anhydride, and

4-methylhexahydrophthalic anhydride. When these curing agents are used, it becomes possible to extend a pot life of the uncured resin composition and obtain a cured product having electrical properties, chemical properties, and mechanical properties in a relatively well-balanced manner. Thus, the kind of the curing agent to be used is appropriately selected in accordance with an application of the composite material.

The amount of the curing agent included in the epoxy resin composition (II) is at least an appropriate amount for curing the epoxy resin blended in the epoxy resin composition (II). The amount of the curing agent needs to be appropriately adjusted in accordance with the kinds of the epoxy resin and the curing agent to be used. The amount of the curing agent is appropriately adjusted in consideration of the presence/absence and the addition amount of other curing agents and a curing accelerator, stoichiometry with the epoxy resin, the curing rate of the composition, and the like. The curing agent is blended in an amount of preferably from 30 to 100 parts by mass, more preferably from 30 to 70 parts by mass, with respect to 100 parts by mass of the epoxy resin included in the prepreg.

1-2-4. Other optional components

The epoxy resin composition (II) of the present invention requires the epoxy resin [A] and the epoxy resin [C] described above, but it may also include other optional components. Other optional components are the same as described in the above 1-1-3.

1-3. Epoxy resin composition (III)

The epoxy resin composition (III) includes at least the epoxy resin [A] and the epoxy resin [D] having an epoxy equivalent weight of 110 g/eq or less.

The preferable viscosity of the epoxy resin composition (III) of the present invention at 100°C is as described in the epoxy resin composition (I).

A resin cured product obtained by curing the epoxy resin composition (III) of the present invention has a glass transition temperature of preferably 150°C or higher, more preferably from 170 to 400°C. If it is lower than 150°C, heat resistance is not sufficient.

The bending elastic modulus of the resin cured product obtained by curing the epoxy resin composition (III) of the present invention measured by the JIS K 7171 method is as described in the epoxy resin composition (I).

1-3-1. Epoxy resin [A]

The epoxy resin [A] included in the epoxy resin composition (III) of the present invention is as described in the epoxy resin composition (I).

A ratio of the epoxy resin [A] with respect to the total amount of the epoxy resins in the epoxy resin composition (III) of the present invention is preferably from 20 to 95% by mass, more preferably from 40 to 60% by mass, further more preferably from 55 to 90% by mass. When the ratio is less than 20% by mass, heat resistance and elastic modulus of the obtained resin cured product may decrease. When the ratio is more than 95% by mass, the viscosity of the epoxy resin composition becomes high and the impregnation properties for the reinforcing fiber substrate tends to decrease. As a result, in both cases, various physical properties of the obtained CFRP may decrease.

1-3-2. Epoxy resin [D]

The epoxy resin composition (III) of the present invention includes the epoxy resin [D] having an epoxy equivalent weight of 110 g/eq or less.

The epoxy resin [D] reduces the viscosity of the epoxy resin [A], increases the resin impregnation properties during production of the prepreg, and increases elastic modulus of the resin cured product. Thus, using the epoxy resin [A] and the epoxy resin [D] in combination makes it possible to improve various physical properties of the FRP while maintaining heat resistance and high elastic modulus.

The epoxy resin [D] is not preferably limited as long as it is an epoxy resin having an epoxy equivalent weight of 110 g/eq or less. However, a glycidyl amine type epoxy resin such as triglycidyl aminophenol, tetraglycidyl-m-xylylenediamine, tetraglycidyl bis(aminomethyl)cyclohexane, or a derivative thereof is preferably used, an epoxy resin having an aromatic group such as triglycidyl aminophenol or tetraglycidyl-m-xylylenediamine is more preferably used, and a trifunctional epoxy resin such as triglycidyl aminophenol or a derivative thereof is particularly preferably used.

A ratio of the epoxy resin [D] with respect to the total amount of the epoxy resins in the epoxy resin composition (III) of the present invention is preferably from 5 to 80% by mass, more preferably from 5 to 60% by mass, further more preferably from 10 to 45% by mass. When the ratio is less than 5% by mass, the viscosity of the epoxy resin composition becomes high and the impregnation properties for the fiber-reinforced substrate tends to decrease. When the ratio is

more than 80% by mass, heat resistance and elastic modulus of the obtained resin cured product may decrease. As a result, in both cases, various physical properties of the obtained CFRP may decrease.

The mass ratio of the epoxy resin [A] and the epoxy resin [D] in the epoxy resin composition (III) of the present invention is preferably from 20:80 to 98:2, more preferably from 50:50 to 95:5, further more preferably from 60:40 to 80:20. Blending in this ratio makes it possible to produce the epoxy resin composition having the viscosity suitable for producing the prepreg and thus obtain the prepreg having excellent handling properties and the cured product having high heat resistance and high elastic modulus.

The epoxy resin composition (III) of the present invention requires two kinds of the epoxy resins described above, but it may also include other epoxy resins or curing agents. Other epoxy resins or curing agents are the same as described in the epoxy resin composition (I) and (II).

1-3-3. Other optional components

The epoxy resin composition (III) of the present invention requires the epoxy resin [A] and the epoxy resin [D] described above, but it may also include other optional components. Other optional components are the same as described in the above 1-1-3.

1-4. Production method of epoxy resin composition

The epoxy resin composition of the present invention can be produced by mixing: the epoxy resin [A]; the curing agent [B], the epoxy resin [C], or the epoxy resin [D]; and, optionally, the thermoplastic resin, the curing agent, and other components. These may be mixed in any order.

Further, a state of the epoxy resin composition may be a state of one liquid in which each component is uniformly mixed or a slurry state in which some of components are dispersed as solid matters.

The method for producing the epoxy resin composition is not particularly limited, and any conventionally known method may be used. As the mixing temperature, a range of from 40 to 120°C can be exemplified. When the mixing temperature is higher than 120°C, in some cases, the partial progress of the curing reaction causes a reduction in the impregnation of the fiber-reinforced substrate layer and a reduction in storage stability of the obtained epoxy resin composition and the prepreg produced by using the epoxy resin composition. When the mixing temperature is lower than 40°C, in some cases, the excessively high viscosity of the epoxy resin composition makes it substantially difficult to perform mixing. The mixing temperature is preferably from 50 to 100°C, more preferably from 50 to 90°C.

As a mixing machine, a conventionally known mixing machine can be used. Specific examples thereof include a roll mill, a planetary mixer, a kneader, an extruder, a Banbury mixer, a mixing container equipped with a stirring blade, and a horizontal mixing tank. The mixing of each component can be performed in the atmosphere or in an inert gas atmosphere. When the mixing is performed in the atmosphere, the temperature and humidity of the atmosphere are preferably controlled. Although not particularly limited, for example, it is preferable that the mixing is performed in the atmosphere in which the temperature is controlled at a constant temperature of 30°C or lower, or in the low humidity atmosphere having a relative humidity of 50% RH or lower.

2. Prepreg

The prepreg of the present invention includes the fiber-reinforced substrate and the epoxy resin composition, with which the fiber-reinforced substrate is impregnated, of the present invention described above (hereinafter, also referred to as "the present epoxy resin composition"), the epoxy resin composition being preferably any of the epoxy resin compositions (I) to (III).

The prepreg of the present invention is a prepreg in which the fiber-reinforced substrate is partially or wholly impregnated with the present epoxy resin composition described above. The content of the present epoxy resin composition in the total prepreg is preferably from 15 to 60% by mass on the basis of the total mass of the prepreg. When the resin content is less than 15% by mass, there is a case where a void or the like occurs in the obtained fiber-reinforced composite material and its mechanical properties are reduced. When the resin content is greater than 60% by mass, there is a case where the reinforcing effect by the reinforcing fiber becomes insufficient and there is a substantial reduction in the mechanical properties relative to the mass. The resin content is preferably from 20 to 55% by mass, more preferably from 25 to 50% by mass.

2-1. Fiber-reinforced substrate

The fiber-reinforced substrate used in the present invention is not particularly limited, and examples thereof include a carbon fiber, a glass fiber, an aramid fiber, a silicon carbide fiber, a polyester fiber, a ceramic fiber, an alumina

fiber, a boron fiber, a metal fiber, a mineral fiber, an ore fiber, and a slag fiber.

Of these reinforcing fibers, a carbon fiber, a glass fiber, and an aramid fiber are preferable. A carbon fiber is more preferable from the standpoint of obtaining the fiber-reinforced composite material which is excellent in specific strength and specific elastic modulus and has a light weight and high strength. A polyacrylonitrile (PAN)-based carbon fiber is particularly preferable as it has excellent tensile strength.

In a case of using the PAN-based carbon fiber as the reinforcing fiber, its tensile modulus is preferably from 100 to 600 GPa, more preferably from 200 to 500 GPa, particularly preferably from 230 to 450 GPa. Further, the tensile strength is preferably from 2000 MPa to 10000 MPa, more preferably from 3000 to 8000 MPa. The diameter of the carbon fiber is preferably from 4 to 20 $\mu$m, more preferably from 5 to 10 $\mu$m. Using such a carbon fiber can improve the mechanical properties of the obtained fiber-reinforced composite material.

In the present invention, the adhered amount of the sizing agent adhered to the reinforcing fiber bundle is preferably from 0.01 to 10% by mass, more preferably from 0.05 to 3.0% by mass, particularly preferably from 0.1 to 2.0% by mass, with respect to the mass of the reinforcing fiber to which the sizing agent is adhered. When the adhered amount of the sizing agent is increased, the adhesion between the reinforcing fiber and the matrix resin tends to increase. On the other hand, the less adhered amount tends to cause more excellent interlaminar toughness of the obtained composite material. The most preferable adhered amount of the sizing agent is from 1.0 to 2.0% by mass from the standpoint of the adhesion between the reinforcing fiber and the matrix resin and from 0.1 to 1.0% by mass from the standpoint of the interlaminar toughness of the obtained composite material.

The reinforcing fiber is preferably formed into a sheet shape to be used. Examples of the reinforcing fiber sheet include a sheet prepared by arranging a large number of reinforcing fibers in one direction, bi-directional woven fabric such as plain weave or twill weave, multi-axial woven fabric, non-woven fabric, a mat, knitted fabric, a braid, and a paper obtained by subjecting a reinforcing fiber to papermaking. Of these, it is preferable to use the unidirectionally arranged sheet, the bi-directional woven fabric, and the multi-axial woven fabric substrate, in which the reinforcing fiber is formed into a sheet shape as a continuous fiber, for obtaining the fiber-reinforced composite material more excellent in the mechanical properties. The thickness of the fiber-reinforced substrate in a sheet shape is preferably from 0.01 to 3 mm, more preferably from 0.1 to 1.5 mm.

2-2. Method for producing the prepreg

The method for producing the prepreg of the present invention is not particularly limited, and any conventionally known method can be adopted. Specifically, a hot melt method and a solvent method can be suitably adopted.

The hot melt method is a method in which a resin composition film is formed by applying a resin composition to a release paper in the form of a thin film, and the resin composition film is laminated on the fiber-reinforced substrate and heated under pressure to impregnate the fiber-reinforced substrate layer with the resin composition.

A method of forming the resin composition into the resin composition film is not particularly limited, and any conventionally known method can be used. Specifically, the resin composition film can be obtained by casting the resin composition on a support such as a release paper or a film using a die extruder, an applicator, a reverse roll coater, a comma coater, or the like. The resin temperature at the time of producing the film is appropriately determined in accordance with the composition and the viscosity of the resin composition. Specifically, the same temperature condition as the mixing temperature in the above method for producing the epoxy resin composition are suitably used. Impregnation of the fiber-reinforced substrate layer with the resin composition may be performed once or multiple times.

The solvent method is a method in which the epoxy resin composition is varnished using a suitable solvent, and the fiber-reinforced substrate layer is impregnated with this varnish.

The prepreg of the present invention can be suitably produced by the hot-melt method not using a solvent among these conventional methods.

When the fiber-reinforced substrate layer is impregnated with the epoxy resin composition film by the hot melt method, the impregnation temperature is preferably in a range of from 50 to 120°C. When the impregnation temperature is lower than 50°C, in some cases, the fiber-reinforced substrate layer is not sufficiently impregnated with the epoxy resin due to the high viscosity of the epoxy resin composition. When the impregnation temperature is higher than 120°C, in some cases, the curing reaction of the epoxy resin composition proceeds, thereby causing a reduction in the storage stability and the draping properties of the obtained prepreg. The impregnation temperature is more preferably from 60 to 110°C, particularly preferably from 70 to 100°C.

When the fiber-reinforced substrate layer is impregnated with the epoxy resin composition film by the hot melt method, the impregnation pressure is appropriately determined in consideration of, for example, the viscosity and the resin flow of the resin composition.

Specific impregnation pressure is from 0.01 to 250 (N/cm), preferably from 0.1 to 200 (N/cm).

3. Fiber-reinforced composite material

The fiber-reinforced composite material (FRP) can be obtained by compositing the fiber-reinforced substrate and the resin composition constituted by blending the epoxy resin composition of the present invention with various kinds of the curing agents and the thermoplastic resins, followed by curing. A method for compositing the fiber-reinforced substrate is not particularly limited. As the prepreg of the present invention, the fiber-reinforced substrate and the resin composition may be composited in advance, or they may be composited at the time of molding by, for example, a resin transfer molding method (RTM method), a hand lay-up method, a filament winding method, or a pultrusion method.

After the fiber-reinforced substrate and the epoxy resin composition of the present invention are composited, the composited product is cured by heating and pressurizing under the specific conditions, so that the fiber-reinforced composite material (FRP) can be obtained. As a method of producing the FRP using the prepreg of the present invention, a known molding method such as an autoclave molding method, a press molding method, or an RTM method can be mentioned.

3-1. Autoclave molding method

As the method for producing FRP of the present invention, the autoclave molding method is preferably used. The autoclave molding method is a molding method in which a prepreg and a film bag are sequentially placed on a lower die of a mold, the prepreg is sealed between the lower die and the film bag, and the prepreg is heated and pressed by an autoclave molding apparatus while the space formed by the lower die and the film bag is vacuumed. It is preferable that heating and pressing is performed under molding conditions of a temperature raising rate of from 1 to 50°C/min at from 0.2 to 0.7 MPa and from 130 to 180°C for from 10 to 30 minutes.

3-2. Press molding method

As the method for producing the FRP of the present invention, the press molding method is preferably used. The production of the FRP by the press molding method is performed by heating and pressing the prepreg of the present invention or a preform formed by laminating the prepreg of the present invention by using a mold. It is preferable that the mold is heated to the curing temperature in advance.

The temperature of the mold during press molding is preferably from 150 to 210°C. When the molding temperature is 150°C or higher, a curing reaction can be sufficiently caused, and the FRP can be obtained with high productivity. Further, when the molding temperature is 210°C or lower, the resin viscosity is not excessively reduced, and thus excessive flow of the resin in the mold can be reduced. As a result, it becomes possible to reduce the outflow of the resin from the mold and the meandering of the fiber, so that the FRP with high quality can be obtained.

The pressure during molding is from 0.05 to 2 MPa, preferably 0.2 to 2 Mpa. When the pressure is 0.05 MPa or higher, the proper flow of the resin can be obtained, thus the occurrence of an appearance defect and a void can be prevented. Further, the prepreg sufficiently adheres to the mold, allowing the production of the FRP having an excellent appearance. When the pressure is 2 MPa or lower, there is no excessive flow of the resin, thus an appearance defect of the obtained FRP hardly occurs. Further, no excessive load is applied to the mold, thus the deformation or the like of the mold hardly occurs.

The molding time is preferably from 1 to 8 hours.

3-3. Resin transfer molding method (RTM method)

The RTM method is also preferably used from the standpoint of efficiently obtaining the fiber-reinforced composite material having a complicated shape. The RTM method described herein refers to a method of obtaining the fiber-reinforced composite material by impregnating the fiber-reinforced substrate disposed in a mold with the liquid epoxy resin composition, followed by curing.

In the present invention, as a mold used in the RTM method, a closed mold made from a rigid material may be used, or an open mold made from a rigid material and a flexible film (bag) may also be used. In the latter case, the fiber-reinforced substrate can be disposed between the open mold made from a rigid material and the flexible film. As the rigid material, various known materials such as metal such as steel or aluminum, fiber-reinforced plastic (FRP), wood, and plaster are used. As a material of the flexible film, a polyamide, a polyimide, a polyester, a fluororesin, a silicone resin, or the like is used.

In a case where the closed mold made from a rigid material is used in the RTM method, normally, the mold is clamped by applying pressure and the epoxy resin composition is injected by applying pressure. In this process, a suction port aside from an injection port can be provided to perform suction by connecting the port to a vacuum pump. It is also possible to perform suction and thereby inject the epoxy resin composition by an atmospheric pressure alone without

using a special pressurizing means. This method can be preferably used since a large member can be produced by providing a plurality of the suction ports.

In a case where the open mold made from a rigid material and the flexible film are used in the RTM method, the epoxy resin may be injected by performing suction using an atmospheric pressure alone without using a special pressurizing means. Using a resin diffusing medium is effective for achieving the excellent impregnation by the injection using an atmospheric pressure alone. Further, before the fiber-reinforced substrate is disposed, a gel coat is preferably applied to the surface of the rigid material.

In the RTM method, the fiber-reinforced substrate is impregnated with the epoxy resin composition and then heat curing is performed. As the mold temperature during the heat curing, a temperature higher than the mold temperature at the time of injecting the epoxy resin composition is normally selected. The mold temperature during the heat curing is preferably from 80 to 200°C. The time of the heat curing is preferably from 1 minute to 20 hours. After completing the heat curing, the mold is opened to take out the fiber-reinforced composite material. Subsequently, the obtained fiber-reinforced composite material may be heated at a higher temperature to perform post curing. The temperature of the post curing is preferably from 150 to 200°C and the time thereof is preferably from 1 minute to 4 hours.

The impregnation pressure for impregnating the fiber-reinforced substrate with the epoxy resin composition by the RTM method is appropriately determined in consideration of the viscosity, the resin flow, and the like of the resin composition.

Specific impregnation pressure is from 0.001 to 10 (MPa), preferably from 0.01 to 1 (MPa). In a case of obtaining the fiber-reinforced composite material by using the RTM method, the viscosity of the epoxy resin composition at 100°C is preferably less than 5000 mPa·s, more preferably from 1 to 1000 mPa·s.

## Examples

Hereinafter, the present invention will be described in more detail with reference to Examples, but the present invention is not limited to these Examples. The components and test methods used in the present Examples and Comparative Examples are described below.

[Components]

(Epoxy resin)

Epoxy resin [A]

- Tetraglycidyl-3,4'-diaminodiphenyl ether (synthesized by the method in Synthesis example 1, hereinafter abbreviated as "3,4'-TGDDE")

Epoxy resin [C]

- Resorcinol diglycidyl ether (manufactured by Nagase ChemteX Corp., EX-201 (trade name), number of glycidyl ethers/number of aromatic rings = 2, hereinafter abbreviated as "Resorcinol-DG"))

Epoxy resin [D]

- Triglycidyl-p-aminophenol (manufactured by Huntsman Advanced Materials Araldite MY0510 (trade name), epoxy equivalent weight = 97 g/eq, hereinafter abbreviated as "TG-pAP")
- Triglycidyl-m-aminophenol (manufactured by Huntsman Advanced Materials Araldite MY0600 (trade name), number of glycidyl ethers/number of aromatic rings = 1, epoxy equivalent weight = 106 g/eq, hereinafter abbreviated as "TG-mAP")

Other epoxy resins

- Tetraglycidyl-4,4'-diaminodiphenylmethane (manufactured by Huntsman Advanced Materials Araldite MY721 (trade name), epoxy equivalent weight = 112 g/eq, hereinafter abbreviated as "TGDDM")
- Tetraglycidyl-4,4'-diaminodiphenyl ether (synthesized by the method in Synthesis example 2, epoxy equivalent weight = 112 g/eq, hereinafter abbreviated as "4,4'-TGDDE")
- Bisphenol A-diglycidyl ether (manufactured by Mitsubishi Chemical Corp. jER825 (trade name), number of glycidyl ethers/number of aromatic rings = 1, epoxy equivalent weight = 176 g/eq, hereinafter abbreviated as "DGEBA")
- N,N-diglycidylaniline (manufactured by Nippon Kayaku Co., Ltd. GAN (trade name), number of glycidyl ethers/number of aromatic rings = 0, epoxy equivalent weight = 117 g/eq, hereinafter abbreviated as "GAN")
- Diglycidyl-o-toluidine (manufactured by Nippon Kayaku Co., Ltd. GOT (trade name), number of glycidyl ethers/number of aromatic rings = 0, epoxy equivalent weight = 130 g/eq, hereinafter abbreviated as "GOT")

(Curing agent)

Curing agent [B]

- 4'4'-diamino-3,3'-diisopropyl-5,5'-dimethyldiphenylmethane (manufactured by Lonza Lonzacure M-MIPA (trade name), hereinafter abbreviated as "M-MIAP")
- 4.4'-diamino-3,3'-diethyl-5,5'-dimethyldiphenylmethane (manufactured by KUMIAI CHEMICAL INDUSTRY Co., Ltd., hereinafter abbreviated as "MED-J")
- Diethyltoulenediamine (manufactured by Huntsman Advanced Materials Aradure5200 (trade name), hereinafter abbreviated as "DETDA")

Other curing agents

- 4,4'-diaminodiphenylmethane (manufactured by Tokyo Chemical Industry Co., Ltd., hereinafter abbreviated as "DDM")
- 3,3'-diaminodiphenyl sulfone (manufactured by KONISHI CHEMICAL INC Co., Ltd., hereinafter abbreviated as "3,3'-DDS")

(Epoxy resin-insoluble thermoplastic resin)

- Polyamide 12 (manufactured by EMS-CHEMIE (Japan) Ltd. TR-55 (trade name), average particle diameter of 20 pm, hereinafter abbreviated as "PA12")

(Epoxy resin-soluble thermoplastic resin)

- Polyethersulfone (manufactured by Sumitomo Chemical Company, SUMIKAEXCEL PES-5003P (trade name), average particle diameter of 20 pm, hereinafter abbreviated as "PES")

(Carbon fiber strand)

- Carbon fiber 1: "TENAX (registered trademark)" IMS65 E23 830tex (carbon fiber strand, tensile strength of 5.8 GPa, tensile elastic modulus of 290 GPa, sizing agent adhesion amount of 1.2% by mass, manufactured by TEIJIN Ltd.)
- Carbon fiber 2: "TENAX (registered trademark)" IMS65 E22 830tex (carbon fiber strand, tensile strength of 5.8 GPa, tensile elastic modulus of 290 GPa, sizing agent adhesion amount of 0.5% by mass, manufactured by TEIJIN Ltd.)

(Carbon fiber multilayer woven fabric)

- Carbon fiber multiaxial woven fabric 1: obtained by stacking four sheets of the carbon fiber 1 at an angle of [+45/90/-45/0], followed by stitching, (carbon fiber total basis weight of woven fabric substrate of 760 g/$m^2$)
- Carbon fiber multiaxial woven fabric 2: obtained by stacking four sheets of the carbon fiber 1 at an angle of [-45/90/+45/0], followed by stitching, (carbon fiber total basis weight of woven fabric substrate of 760 g/$m^2$)

(Synthesis example of epoxy resin)

[Synthesis example 1] Synthesis of 3,4'-TGDDE

Into a four-necked flask equipped with a thermometer, a dropping funnel, a cooling tube, and a stirrer, 1110.2 g (12.0 mol) of epichlorohydrin was charged, and the temperature was increased to 70°C while nitrogen purging was performed, and then 200.2 g (1.0 mol) of 3,4'-diaminodiphenyl ether dissolved in 1000 g of ethanol was added dropwise thereto over 4 hours. The mixture was further stirred for 6 hours to complete the addition reaction to obtain N,N,N',N'-tetrakis(2-hydroxy-3-chloropropyl)-3,4'-diaminodiphenyl ether. Subsequently, after the internal temperature of the flask was lowered to 25°C, 500.0 g (6.0 mol) of a 48% NaOH aqueous solution was added dropwise to the mixture over 2 hours, followed by further stirring for 1 hour. After completion of the cyclization reaction, ethanol was distilled off, extraction was performed with 400 g of toluene, and washing was performed twice with 5% saline. Toluene and epichlorohydrin were removed from the organic layer under reduced pressure to obtain a brownish viscous liquid in an amount of 361.7 g (yield of 85.2%). The purity of 3,4'-TGDDE as a main product was 84% (HPLC area %).

[Synthesis example 2] Synthesis of 4,4'-TGDDE

Into a four-necked flask equipped with a thermometer, a dropping funnel, a cooling tube, and a stirrer, 1110.2 g (12.0 mol) of epichlorohydrin was charged, and the temperature was increased to 70°C while nitrogen purging was performed, and the mixture was dissolved in 1000 g of ethanol. 200.2 g (1.0 mol) of 4,4'-diaminodiphenyl ether was dropped over 4 hours. The mixture was further stirred for 6 hours to complete the addition reaction to obtain N,N,N',N'-tetrakis(2-hydroxy-3-chloropropyl)-4,4'-diaminodiphenyl ether. Subsequently, after the internal temperature of the flask was lowered to 25°C, 500.0 g (6.0 mol) of a 48% NaOH aqueous solution was added dropwise to the mixture over 2 hours, followed by further stirring for 1 hour. After completion of the cyclization reaction, ethanol was distilled off, extraction was performed with 400 g of toluene, and washing was performed twice with 5% saline. Toluene and epichlorohydrin were removed from the organic layer under reduced pressure to obtain a brownish viscous liquid in an amount of 377.8 g (yield of 89.0%). The purity of 4,4'-TGDDE as a main product was 87% (HPLC area %).

[Evaluation method]

(1) Physical properties of resin cured product

(1-1) Preparation of epoxy resin composition (Examples 1 to 8, 49 to 52, Comparative Examples 1 to 6, 24)

The curing agent was added to the epoxy resin in a ratio described in Tables 1 and 9 and the mixture was mixed using a stirrer at 80°C for 30 minutes to prepare an epoxy resin composition. Note that, in the composition described in Table 1, the glycidyl group of the epoxy resin and the amino group of the curing agent have the same equivalent weight.

(Examples 9 to 33, 39 to 48, Comparative Examples 7 to 16, 20-23)

The soluble thermoplastic resin was dissolved in the epoxy resin using a stirrer at 120°C in a ratio described in each Table. Subsequently, the temperature was lowered to 80°C and the curing agent and the insoluble thermoplastic resin were added to the mixture, followed by mixing for 30 minutes, to prepare an epoxy resin composition. Note that, in the composition described in the table, the glycidyl group of the epoxy resin and the amino group of the curing agent have the same equivalent weight.

(Examples 34 to 38, Comparative Examples 17 to 19)

The curing agent was added to the epoxy resin in a ratio described in Table 6 and the mixture was mixed using

a stirrer at 40°C for 30 minutes to prepare an epoxy resin composition. Note that, in the composition described in Table 6, the glycidyl group of the epoxy resin and the amino group of the curing agent have the same equivalent weight.

(1-2) Production of resin cured product

The epoxy resin composition prepared in (1-1) was deaerated in vacuum and injected in a mold made of silicone resin set to a thickness of 4 mm by a spacer made of silicone resin having a thickness of 4 mm. The epoxy resin composition was cured at a temperature of 180°C for 2 hours to obtain a resin cured product having a thickness of 4 mm.

(1-3) DMA-wet-Tg

The glass transition temperature was measured in accordance with the SACMA 18R-94 method.

A resin test piece was prepared in a size of 50 mm x 6 mm x 2 mm. The resin test piece thus prepared was subjected to a water absorption treatment using a pressure cooker (manufactured by ESPEC Corp., HASTEST PC-422R8) under a condition of 121°C for 24 hours. The storage elastic modulus E' of the resin test piece subjected to the water absorption treatment was measured from 50°C to the rubber elastic region using a dynamic viscoelasticity measuring device Rheogel-E400 manufactured by UBM under conditions of a measurement frequency of 1 Hz, a temperature raising rate of 5°C/min, and a strain of 0.0167% with the distance between chucks set to 30 mm. Log E' was plotted over temperature, and the temperature determined from the intersection point of the approximate straight line of the flat region of log E' and the approximate straight line of the region where E' was transited was recorded as the glass transition temperature (Tg) .

(1-4) DMA-Tg

The glass transition temperature was measured in accordance with the SACMA 18R-94 method.

A resin test piece was prepared in a size of 50 mm x 6 mm x 2 mm. The storage elastic modulus E' was measured from 50°C to the rubber elastic region using a dynamic viscoelasticity measuring device Rheogel-E400 manufactured by UBM under conditions of a measurement frequency of 1 Hz, a temperature raising rate of 5°C/min, and a strain of 0.0167% with the distance between chucks set to 30 mm. Log E' was plotted over temperature, and the temperature determined from the intersection point of the approximate straight line of the flat region of log E' and the approximate straight line of the region where E' was transited was recorded as the glass transition temperature (Tg).

(1-5) Resin bending strength and resin bending elastic modulus

The test was performed in accordance with the JIS K7171 method. In this test, the resin test piece was prepared in a size of 80 mm x 10 mm x h4 mm. The bending test was performed with a distance L between support points of 16 x h (thickness) and a testing speed of 2 m/min to measure the bending strength and the bending elastic modulus.

(1-6) Viscosity

The viscosity of the epoxy resin composition prepared in (1-1) was measured using a rheometer ARES-RDA manufactured by TA Instruments. The viscosity measurement was performed, by using a parallel plate having a diameter of 25 mm and setting the thickness of the epoxy resin composition between the parallel plates to 0.5 mm, under a condition of an angular speed of 10 radian/sec up to 180°C at a temperature raising rate of 2°C/min. Then, the viscosity at 100°C was measured from the temperature-viscosity curve.

(2) Prepreg handling property

(2-1) Production of prepreg

The epoxy resin composition obtained in (1-1) was applied on a release paper using a reverse roll coater to produce a resin film having a basis weight of 50 g/$m^2$. Next, carbon fibers were unidirectionally arranged so as to have a fiber mass per unit area of 190 g/$m^2$ to produce a reinforcing fiber substrate layer in a sheet shape. The resin films described above were laminated on both sides of this reinforcing fiber substrate layer and subjected to heating and pressurizing under conditions of a temperature of 95°C and a pressure of 0.2 MPa to produce a unidirectional prepreg having a carbon fiber content ratio of 65% by mass.

(2-2) Storage stability

The prepreg obtained in (2-1) was stored at a temperature of 26.7°C and a humidity of 65% for 10 days. After that, the prepreg was cut and laminated in a mold for evaluation. The evaluation results were expressed by the following criteria (○ and ×).

○: laminated prepreg exhibits sufficient followability in mold and has almost the same handling properties as that immediately after production.
×: curing reaction of prepreg has proceeded and tack/draping properties are significantly reduced, causing difficulty in laminating prepreg in mold.

(2-3) Molding void

The prepreg obtained in (2-1) was stored at a temperature of 26.7°C and a humidity of 65% for 10 days. After that, the prepreg was cut into a size of 150 mm x 150 mm, the cut pieces were laminated in a laminate configuration of $[0]_{10}$, and the resulting laminate was subjected to a compaction treatment (storing laminate in vacuum pack) and stored under an environment of a temperature of 23°C.
Thirty-two days after the lamination, molding was performed using an ordinary vacuum autoclave molding method under a pressure of 0.59 MPa and under a condition of 180°C for 2 hours. The test piece was cut out, and the cross section thereof was polished to observe the presence/absence of a void using a microscope.

○: absence of void
×: presence of void

(2-4) Tack properties

The tack properties of the prepreg was measured by the following method using a tacking tester TAC-II (RHESCA Co., Ltd.). As a test method, the prepreg obtained in (2-1) was set on a test stage maintained at 27°C and an initial load of 100 gf was applied to the prepreg by a tack probe of φ5 maintained at 27°C. The maximum load when the prepreg was pulled out at a test speed of 10 mm/sec was determined.
The tack probe test was performed using both the prepreg immediately after the production and the prepreg after being stored at a temperature of 26.7°C and a humidity of 65% for 10 days. The evaluation results were expressed by the following criteria (○ and ×).

○: load immediately after production is 200 gf or more, and tack retention after storing for 10 days is from 50% or more to less than 100%.
×: load immediately after production is 200 gf or more, and tack retention after storing for 10 days is less than 50%.

(2-5) Drape properties

The drape properties of the prepreg were evaluated by the following test in accordance with ASTM D1388. The prepreg obtained in (2-1) was cut in a 90° direction with respect to the 0° fiber direction, and the drape properties (flexural rigidity, mg*cm) to inclination having an inclination angle of 41.5° were evaluated. This evaluation was performed using both the prepreg immediately after the production and the prepreg after being stored at a temperature of 26.7°C and a humidity of 65% for a predetermined period of time. The evaluation results were expressed by the following criteria (○ and ×).

○: drape properties after lapse of 20 days remain same as those immediately after production.
×: drape properties after lapse of 20 days decrease by 50% or more as compared with those immediately after production.

(2-6) Impregnation properties

Impregnation properties of the resin for the fiber substrate was evaluated by the water absorption of the prepreg. The lower water absorption of the obtained prepreg means the higher impregnation properties of the resin.
The prepreg obtained in (2-1) was cut into a square having a side of 100 mm, and the mass (W1) thereof was measured. Subsequently, the prepreg was submerged in water in a desiccator. The pressure of the inside of the desiccator is reduced to 10 kPa or less to replace the air inside the prepreg with water. The prepreg was taken out from water, and

water on the surface of the prepreg was wiped off to measure the mass (W2) of the prepreg. The water absorption was calculated from these measurement values using the following formula.

$$\text{Water absorption (\%)} = [(W2 - W1)/W1] \times 100$$

W1: mass (g) of prepreg
W2: mass (g) of prepreg after water absorption

The evaluation results were expressed by the following criteria (○ and ×).

○: water absorption of less than 10%
×: water absorption of 10% or more

(3) CFRP physical properties

(3-1) OHC

The prepreg obtained in (2-1) was cut into a square having a side of 360 mm and laminated to obtain a laminate having a laminate configuration of $[+45/0/-45/90]_{3s}$. Molding was performed using an ordinary vacuum autoclave molding method under a pressure of 0.59 MPa and under a condition of 180°C for 2 hours. The obtained molded product was cut into a size of 38.1 mm in width × 304.8 mm in length, and a hole having a diameter of 6.35 mm was made by drilling in the center of the test piece to obtain a test piece for the open hole compression (OHC) test.

The test was performed in accordance with SACMA SRM3 and the open hole compression was calculated from the maximum point load.

(3-2) Hot-wet OHC

The prepreg obtained in (2-1) was cut into a square having a side of 360 mm and laminated to obtain a laminate having a laminate configuration of $[+45/0/-45/90]_{3s}$. Molding was performed using an ordinary vacuum autoclave molding method under a pressure of 0.59 MPa and under a condition of 180°C for 2 hours. The obtained molded product was cut into a size of 38.1 mm in width × 304.8 mm in length, and a hole having a diameter of 6.35 mm was made by drilling in the center of the test piece to obtain a test piece for the open hole compression (OHC) test. The OHC test piece thus prepared was subjected to a water absorption treatment using a pressure cooker (manufactured by ESPEC Corp., HASTEST PC-422R8) under a condition of 121°C for 24 hours.

The test was performed in accordance with SACMA SRM3 and the open hole compression was calculated from the maximum point load. Note that the measurement was performed at 121°C.

(3-3) In-plane shear strength (IPSS) and In-plane shear modulus (IPSM)

The prepreg obtained in (2-1) was cut into a square having a side of 300 mm and laminated to obtain a laminate having a laminate configuration of $[+45/-45]_{2s}$.

The measurement sample was molded using an ordinary vacuum autoclave molding method under a pressure of 0.59 MPa and under a condition of 180°C for 2 hours. The obtained molded product was cut into a size of 25 mm in width x 230 mm in length and subjected to the measurement in accordance with SACMA SRM 7. The IPS strength and the IPS modulus were calculated from the maximum point load.

(3-4) Compression after impact (CAI)

The prepreg obtained in (2-1) was cut into a square having a side of 360 mm and laminated to obtain a laminate having a laminate configuration of $[+45/0/-45/90]_{3s}$. Molding was performed using an ordinary vacuum autoclave molding method under a pressure of 0.59 MPa and under a condition of 180°C for 2 hours. The obtained molded product was cut into a size of 101.6 mm in width x 152.4 mm in length to obtain a test piece for the compression after impact (CAI) test. After measuring the size of each test piece, the sample was given impact energy of 30.5 J using a drop weight impact tester (Dynatup manufactured by Instron) in the impact test. After the impact, the damaged area of the sample was measured using an ultrasonic flaw detector (SDS-3600, HIS3/HF, manufactured by Krautkramer Co., Ltd.). After the impact, the strength test of the sample was performed such that the strain gauges were adhered to the sample at a position 25.4 mm away from the top edge and 25.4 mm away from the side edge on both the right and the left sides and

the front and back sides in the same manner in total of 4 units per sample and then the load was applied to the sample using a testing machine (Autograph manufactured by Shimadzu Corp.) with the crosshead speed of 1.27 mm/min until the sample was fractured.

(3-5) Interlaminar fracture toughness mode I (GIc)

The prepreg obtained in (2-1) was cut into a square with a side of 360 mm, and the cut pieces were laminated by 10 layers in a 0° direction to produce 2 laminates. In order to make an initial crack, a release sheet was inserted between the two laminates, then both were combined to obtain a prepreg laminate having a lamination configuration of $[0]_{20}$. Molding was performed using an ordinary vacuum autoclave molding method under a pressure of 0.59 MPa and under a condition of 180°C for 2 hours. The obtained molded product (FRP) was cut into a size of 12.7 mm in width × 330.2 mm in length to obtain a test piece for interlaminar fracture toughness mode I (GIc).

As a test method of the GIc, a double cantilever beam interlaminar fracture toughness test method (DCB method) was used. A pre-crack (initial crack) of 12.7 mm was made from the tip of the release sheet, and then a test of further developing the crack was performed. The test was terminated when the crack development length reached 127 mm from the tip of the pre-crack. The crosshead speed of the test piece tensile testing machine was set to 12.7 mm/min, and the measurement was performed for n=5.

The crack development length was measured from both end faces of the test piece by using a microscope, and the load and the crack opening displacement were measured to calculate the GIc.

(3-6) Interlaminar fracture toughness mode II (GIIc)

The prepreg obtained in (2-1) was cut into a square with a predetermined size, and the cut pieces were laminated by 10 layers in a 0° direction to produce 2 laminates. In order to form an initial crack, a release sheet was inserted between the two laminates, then both were combined to obtain a prepreg laminate having a lamination configuration of $[0]_{20}$. Molding was performed using an ordinary vacuum autoclave molding method under a pressure of 0.59 MPa and under a condition of 180°C for 2 hours. The obtained molded product (fiber-reinforced composite material) was cut into a size of 12.7 mm in width × 330.2 mm in length to obtain a test piece for interlaminar fracture toughness mode II (GIIc). A GIIc test was performed using this test piece.

As a GIIc testing method, an end notched flexure test (ENF test) in which a three-point flexural load was applied was performed. The distance between support points was set to 101.6 mm. The test piece was disposed such that the tip of a sheet produced from a PTFE sheet having a thickness of 25 μm was in a distance of 38.1 mm from the support point, and a flexural load was applied to this test piece at a speed of 2.54 mm/min to form an initial crack.

After that, the test piece was disposed such that the tip of the crack is positioned in a distance of 25.4 mm from the support point, and a flexural load was applied to the test piece at a speed of 2.54 mm/min to perform the test. The test was performed three times in the same manner, and the GIIc was calculated each time from load-stroke in each of the flexural tests, then the average value thereof was calculated.

The tip of the crack was measured from both end faces of the test piece using a microscope. The measurement of the GIIc test was performed using the test pieces for n=5.

(Epoxy resin composition (I))

[Examples 1 to 8, Comparative Examples 1 to 6]

An epoxy resin composition was obtained by mixing the components described in Table 1 using a stirrer. Various physical properties of a resin cured product prepared by curing the obtained epoxy resin composition are shown in Table 1. When 3,4'-TGDDE, an epoxy resin having a structure of Chemical Formula 1, was used as the epoxy resin, the higher bending elastic modulus was observed as compared with a case of using the epoxy resin not having a structure of Chemical Formula 1 despite using the same curing agent. Further, Examples 1 to 6 satisfying the epoxy resin composition (I) of the present invention exhibited the high DMA-wet-Tg of 175°C or higher and the high elastic modulus of 3.5 GPa or more.

[Examples 9 to 16, Comparative Examples 7 to 12]

An epoxy resin composition was obtained by mixing the components described in Table 2 using a stirrer. The prepreg was produced using the carbon fiber 1 as the reinforcing fiber and each epoxy resin composition thus obtained. Various physical properties of the CFRP produced by using the obtained prepreg were shown in Table 2. When 3,4'-TGDDE, an epoxy resin having a structure of Chemical Formula 1, was used as the epoxy resin, the higher OHC was

observed as compared with a case of using the epoxy resin not having a structure of Chemical Formula 1 despite using the same curing agent. Further, Examples 9 to 16 satisfying the epoxy resin composition (I) of the present invention exhibited the high Hot-wet OHC of 200 MPa or more.

[Examples 17 to 20]

An epoxy resin composition was obtained by mixing the components described in Table 3 using a stirrer. The prepreg was produced using the carbon fiber 2 as the reinforcing fiber and each epoxy resin composition thus obtained. Various physical properties of the CFRP produced by using the obtained prepreg were shown in Table 3. Examples 17 to 20 exhibited the high Hot-wet OHC of 200 MPa or more.

In Comparative Examples 1 to 12, an epoxy resin composition was produced using TGDDM or 4,4'-TGDDE without using the epoxy resin [A]. However, various physical properties thereof were low.

[Table 1]

| | | | Example | | | | | | | | Comparative Example | | | | | |
|---|---|---|---|---|---|---|---|---|---|---|---|---|---|---|---|---|
| | | | 1 | 2 | 3 | 4 | 5 | 6 | 7 | 8 | 1 | 2 | 3 | 4 | 5 | 6 |
| Resin composition | Epoxy resin A | 3,4'-TGDDE | 100 | 100 | 100 | 70 | 70 | 70 | 100 | 100 | | | | | | |
| | Other epoxy resins | TG-pAP | | | | 30 | 30 | 30 | | | | | | | | |
| | | TGDDM | | | | | | | | | | | 100 | 100 | | |
| | | 4,4'-TGDDE | | | | | | | | | 100 | 100 | | | 100 | 100 |
| | Curing agent B | M-MIPA | 70.3 | | | 73.3 | | | | | | | | | | |
| | | MED-J | | 64.0 | | | 66.7 | | | | | | 63.4 | | 67.0 | |
| | | DETDA | | | 40.1 | | | 41.8 | | | | | | 39.7 | | 42.0 |
| | Other curing agents | DDM | | | | | | | 44.7 | | 44.7 | | | | | |
| | | 3,3'-DDS | | | | | | | | 56.8 | | 56.8 | | | | |
| Characteristics | DMA-wet-Tg (°C) | | 188 | 180 | 186 | 182 | 178 | 183 | 156 | 160 | 157 | 169 | 184 | 193 | 182 | 193 |
| | Bending elastic modulus (GPa) | | 3.8 | 3.6 | 3.6 | 3.6 | 3.5 | 3.5 | 3.1 | 4.8 | 3.0 | 4.4 | 3.2 | 3.0 | 3.2 | 3.2 |

[Table 2]

| | | | Example | | | | | | | | Comparative Example | | | | | |
|---|---|---|---|---|---|---|---|---|---|---|---|---|---|---|---|---|
| | | | 9 | 10 | 11 | 12 | 13 | 14 | 15 | 16 | 7 | 8 | 9 | 10 | 11 | 12 |
| Resin composition | Epoxy resin A | 3,4'-TGDDE | 100 | 100 | 100 | 70 | 70 | 70 | 100 | 100 | | | | | | |
| | Other epoxy resins | TG-pAP | | | | 30 | 30 | 30 | | | | | | | | |
| | | TGDDM | | | | | | | | | 100 | 100 | 100 | 100 | | |
| | | 4,4'-TGDDE | | | | | | | | | | | | | 100 | 100 |
| | Curing agent B | M-MIPA | 70.3 | | | 73.3 | | | | | | | | | | |
| | | MED-J | | 64 | | | 66.7 | | | | | | 63.4 | | 67 | |
| | | DETDA | | | 40.1 | | | 41.8 | | | | | | 39.7 | | 42 |
| | Other curing agents | DDM | | | | | | | 44.7 | | 44.7 | | | | | |
| | | 3,3'-DDS | | | | | | | | 56.8 | | 56.8 | | | | |
| | Epoxy resin-soluble thermoplastic resin | PES | 32.7 | 31.5 | 26.9 | 33.3 | 32.0 | 27.2 | 27.8 | 30.1 | 27.8 | 30.1 | 31.4 | 26.8 | 32.1 | 27.3 |
| | Epoxy resin-insoluble thermoplastic resin | PA12 | 22.6 | 21.7 | 18.6 | 23.0 | 22.1 | 18.8 | 19.2 | 20.8 | 19.2 | 20.8 | 21.6 | 18.5 | 22.1 | 18.8 |
| Characteristics | OHC (MPa) | | 310 | 301 | 299 | 300 | 288 | 291 | 266 | 340 | 258 | 328 | 272 | 258 | 269 | 271 |
| | Hot-wet OHC @121 °C (MPa) | | 236 | 221 | 223 | 219 | 205 | 207 | 163 | 190 | 157 | 179 | 192 | 186 | 193 | 189 |

[Table 3]

| | | | Example | | | |
|---|---|---|---|---|---|---|
| | | | 17 | 18 | 19 | 20 |
| Resin composition | Epoxy resin A | 3,4'-TGDDE | 100 | 70 | 70 | 70 |
| | Other epoxy resins | TG-pAP | | 30 | 30 | 30 |
| | | TGDDM | | | | |
| | | 4,4'-TGDDE | | | | |
| | Curing agent B | M-MIPA | 70.3 | 70.3 | | |
| | | MED-J | | | 66.7 | |
| | | DETDA | | | | 41.8 |
| | Epoxy resin-soluble thermoplastic resin | PES | 32.7 | 33.3 | 32.0 | 27.2 |
| | Epoxy resin-insoluble thermoplastic resin | PA12 | 22.6 | 23.0 | 22.1 | 18.8 |
| Characteristics | OHC (MPa) | | 303 | 295 | 279 | 284 |
| | Hot-wet OHC @121 °C (MPa) | | 231 | 225 | 212 | 206 |
| | GIc ($J/m^2$) | | 701 | 689 | 675 | 647 |

(Epoxy resin composition (II)

(Examples 21 to 29, Comparative Examples 13 to 16)

An epoxy resin composition was obtained by mixing the components described in Table 4 using a stirrer. Various physical properties of a resin cured product prepared by curing the obtained epoxy resin composition were shown in Table 4. When 3,4'-TGDDE, an epoxy resin having a structure of Chemical Formula 1, was used as the epoxy resin, the higher resin bending elastic modulus was observed as compared with a case of using the epoxy resin not having a structure of Chemical Formula 1 despite using the same curing agent. Further, Examples 21 to 26 satisfying the epoxy resin composition (II) of the present invention exhibited the low viscosity of 130 Pa·s or less at 100°C, the high bending strength of 180 MPa or more, the high bending elastic modulus of 4.3 GPa or more, and the high Tg of 170°C or higher.

The prepreg was produced using each epoxy resin composition obtained in the above and carbon fiber 1. Various handling properties of the obtained prepreg are shown in Table 4. Examples 21 to 26 showed excellent results in any evaluation on the storage stability, the molding void, the tack properties, and the drape properties.

Various physical properties of the CFRP produced using the obtained prepreg are shown in Table 4. When 3,4'-TGDDE, an epoxy resin having a structure of Chemical Formula 1, was used as the epoxy resin, the higher G1c and G2c were observed as compared with a case of using the epoxy resin not having a structure of Chemical Formula 1 despite using the same curing agent. Further, Examples 21 to 26 satisfying the epoxy resin composition (II) of the present invention exhibited the high OHC of 320 MPa or more, the high IPSS of 120 MPa or more, the high IPSM of 5.7 GPa or more, the high CAI of 310 MPa or more, the low CAI damaged area of 4.0 $cm^2$ or less, the high GIc of 620 $J/m^2$ or more, and the high GIIc of 2200 $J/m^2$ or more.

In Comparative Examples 13 to 16, TGDDM was used without using the epoxy resin [A]. However, the physical properties of the resin physical properties CFRP were low.

[Table 4]

| | | | Example | | | | | | | | | Comparative Example | | | |
|---|---|---|---|---|---|---|---|---|---|---|---|---|---|---|---|
| | | | 21 | 22 | 23 | 24 | 25 | 26 | 27 | 28 | 29 | 13 | 14 | 15 | 16 |
| Resin composition | Epoxy resin A | 3,4'-TGDDE | 70 | 50 | 90 | 80 | 50 | 30 | 70 | 70 | 50 | | | | |
| | Epoxy resin B | Resorcinol-DG | 30 | 20 | 10 | 10 | 30 | 70 | | | | | | 30 | |
| | Other epoxy resins | TGDDM | | 30 | | | 20 | | | | 30 | 70 | 70 | 70 | 80 |
| | | DGEBA | | | | | | | 30 | | 20 | 30 | | | 20 |
| | | TG-mAP | | | | 10 | | | | 30 | | | 30 | | |
| | Curing agent | 3,3'-DDS | 50.2 | 49.9 | 50.5 | 49.9 | 49.9 | 49.9 | 48.0 | 52.1 | 49.5 | 50.2 | 52.1 | 50.2 | 49.1 |
| | Epoxy resin-soluble thermoplastic resin | PES | 30 | 30 | 30 | 30 | 30 | 30 | 30 | 30 | 30 | 30 | 30 | 30 | 30 |
| | Epoxy resin-insoluble thermoplastic resin | PA12 | 25 | 25 | 25 | 25 | 25 | 25 | 25 | 25 | 25 | 25 | 25 | 25 | 25 |
| Resin Physical properties | Viscosity at 100°C (Pa·s) | | 80 | 90 | 120 | 100 | 80 | 5 | 150 | 150 | 135 | 90 | 90 | 80 | 100 |
| | Resin bending strength (MPa) | | 190 | 200 | 190 | 190 | 190 | 180 | 160 | 195 | 160 | 160 | 155 | 160 | 160 |
| | Resin bending elastic modulus (GPa) | | 4.6 | 4.4 | 4.7 | 4.7 | 4.5 | 4.6 | 4.1 | 4.8 | 4.2 | 4.0 | 4.4 | 4.3 | 4.1 |
| | DMA-Tg(°C) | | 195 | 205 | 210 | 200 | 200 | 170 | 195 | 205 | 210 | 200 | 210 | 195 | 210 |
| Prepreg Handling properties | Storage stability | | ○ | ○ | ○ | ○ | ○ | ○ | ○ | × | ○ | ○ | × | ○ | ○ |
| | Molding void | | ○ | ○ | ○ | ○ | ○ | ○ | ○ | × | ○ | ○ | × | ○ | ○ |
| | Tack properties | | ○ | ○ | ○ | ○ | ○ | ○ | ○ | × | ○ | ○ | × | ○ | ○ |
| | Drape properties | | ○ | ○ | ○ | ○ | ○ | ○ | ○ | × | ○ | ○ | × | ○ | ○ |

(continued)

| | | Example | | | | | | | | | Comparative Example | | | |
|---|---|---|---|---|---|---|---|---|---|---|---|---|---|---|
| | | 21 | 22 | 23 | 24 | 25 | 26 | 27 | 28 | 29 | 13 | 14 | 15 | 16 |
| CFRP physical properties | OHC (MPa) | 350 | 330 | 360 | 360 | 340 | 350 | 310 | 360 | 315 | 300 | 340 | 320 | 310 |
| | IPSS(MPa) | 128 | 128 | 130 | 128 | 126 | 128 | 124 | 132 | 122 | 120 | 125 | 122 | 124 |
| | IPSM(MPa) | 6.0 | 5.8 | 6.1 | 6.1 | 5.9 | 5.8 | 5.3 | 6.1 | 5.5 | 5.3 | 5.8 | 5.5 | 5.5 |
| | CAI-30.5J(MPa) | 340 | 320 | 350 | 350 | 330 | 340 | 300 | 350 | 295 | 295 | 325 | 310 | 300 |
| | CAI-30.5J Damaged area ($cm^2$) | 3.5 | 3.9 | 3.5 | 3.7 | 3.5 | 3.4 | 5.0 | 3.5 | 5.3 | 4.8 | 3.3 | 4.4 | 4.9 |
| | GIc ($J/m^2$) | 700 | 630 | 753 | 753 | 665 | 735 | 648 | 753 | 613 | 568 | 604 | 630 | 578 |
| | GIIc ($J/m^2$) | 2276 | 2224 | 2311 | 2311 | 2241 | 2259 | 2049 | 2311 | 2084 | 2018 | 2080 | 2119 | 2031 |

[Examples 30 to 33]

An epoxy resin composition was obtained by mixing the components described in Table 5 using a stirrer. Various physical properties of a resin cured product prepared by curing the obtained epoxy resin composition are shown in Table 5. Examples 30 to 33 exhibited the low viscosity of 130 Pa·s or less at 100 °C, the high bending strength of 180 MPa or more, the high bending elastic modulus of 4.3 GPa or more, and the high Tg of 190°C or higher.

The prepreg was produced using each epoxy resin composition obtained in the above and carbon fiber 2. Various handling properties of the obtained prepreg are shown in Table 5. Examples 30 to 33 showed excellent results in any evaluation on the storage stability, the molding void, the tack properties, and the drape properties.

Various physical properties of the CFRP produced using the obtained prepreg are shown in Table 5. Examples 30 to 33 exhibited the high OHC of 320 MPa or more, the high IPSS of 120 MPa or more, the high IPSM of 5.7 GPa or more, the high CAI of 310 MPa or more, the low CAI damaged area of 4.0 $cm^2$ or less, the high GIc of 660 $J/m^2$ or more, and the high GIIc of 2200 $J/m^2$ or more.

[Table 5]

| | | | Example | | | |
|---|---|---|---|---|---|---|
| | | | 30 | 31 | 32 | 33 |
| Resin composition | Epoxy resin A | 3,4'-TGDDE | 70 | 50 | 80 | 50 |
| | Epoxy resin B | Resorcinol-DG | 30 | 20 | 10 | 30 |
| | Other epoxy resins | TGDDM | | 30 | | 20 |
| | | DGEBA | | | | |
| | | TG-mAP | | | 10 | |
| | Curing agent | 3,3'-DDS | 50.2 | 49.9 | 49.9 | 49.9 |
| | Epoxy resin-soluble thermoplastic resin | PES | 30 | 30 | 30 | 30 |
| | Epoxy resin-insoluble thermoplastic resin | PA12 | 25 | 25 | 25 | 25 |
| Resin physical properties | Viscosity at 100°C (Pa·s) | | 80 | 90 | 100 | 80 |
| | Resin bending strength (MPa) | | 190 | 200 | 190 | 190 |
| | Resin bending elastic modulus (GPa) | | 4.6 | 4.4 | 4.7 | 4.5 |
| | DMA-Tg(°C) | | 195 | 205 | 200 | 200 |
| Prepreg handling properties | Storage stability | | ○ | ○ | ○ | ○ |
| | Molding void | | ○ | ○ | ○ | ○ |
| | Tack properties | | ○ | ○ | ○ | ○ |
| | Drape properties | | ○ | ○ | ○ | ○ |
| CFRP physical properties | OHC (MPa) | | 350 | 330 | 360 | 340 |
| | IPSS(MPa) | | 126 | 127 | 124 | 127 |
| | IPSM(MPa) | | 5.9 | 5.9 | 6.0 | 5.8 |
| | CAI-30.5J(MPa) | | 350 | 330 | 350 | 340 |
| | CAI-30.5J Damaged area ($cm^2$) | | 3.5 | 3.9 | 3.7 | 3.5 |
| | GIc ($J/m^2$) | | 735 | 667 | 773 | 702 |
| | GIIc ($J/m^2$) | | 2249 | 2282 | 2336 | 2301 |

(Epoxy resin composition (III))

[Examples 34 to 38, Comparative Examples 17 to 19]

An epoxy resin composition was obtained by mixing the components described in Table 6 using a stirrer. Various physical properties of a resin cured product prepared by curing the obtained epoxy resin composition are shown in Table 6. When 3,4'-TGDDE, an epoxy resin having a structure of Chemical Formula 1, was used as the epoxy resin, the higher resin bending elastic modulus was observed as compared with a case of using the epoxy resin not having a structure of Chemical Formula 1 despite using the same curing agent. Further, Examples 34 to 37 satisfying the epoxy resin composition (III) of the present invention exhibited the high Tg of 210°C or higher and the high elastic modulus of 4.3 GPa or more.

[Examples 39 to 44, Comparative Examples 20 to 23]

An epoxy resin composition was obtained by mixing the components described in Table 7 using a stirrer. The prepreg was produced using the carbon fiber 1 as the reinforcing fiber and each epoxy resin composition thus obtained. Various physical properties of the CFRP produced by using the obtained prepreg are shown in Table 7. When 3,4'-TGDDE, an epoxy resin having a structure of Chemical Formula 1, was used as the epoxy resin, the higher CFRP physical property was observed as compared with a case of using the epoxy resin not having a structure of Chemical Formula 1 despite using the same curing agent. Further, Examples 39 to 42 satisfying the epoxy resin composition (III) of the present invention exhibited the high CAI of 330 MPa or more, the high G1c of 550 J/m$^2$ or more, the high G2c of 2100 J/m$^2$ or more, and the high OHC of 335 MPa or more. Further, Example 6 also showed the excellent handling properties of the prepreg. Example 39 having the less epoxy resin [B] than Examples 40 and 41 exhibited the inferior handling properties though this did not cause any problem.

In Comparative Examples 17 to 23, an epoxy resin composition was produced using TGDDM and 4,4'-TGDDE without using the epoxy resin [A]. However, various physical properties thereof were low.

[Examples 45 to 48]

An epoxy resin composition was obtained by mixing the components described in Table 8 using a stirrer. The prepreg was produced using the carbon fiber 2 as the reinforcing fiber and each epoxy resin composition thus obtained. Various physical properties of the CFRP produced by using the obtained prepreg are shown in Table 8. Examples 45 to 48 exhibited the high CAI of 330 MPa or more, the high G1c of 550 J/m$^2$ or more, the high G2c of 2100 J/m$^2$ or more, and the high OHC of 335 MPa or more.

[Table 6]

| | | | Example | | | | | Comparative Example | | |
|---|---|---|---|---|---|---|---|---|---|---|
| | | | 34 | 35 | 36 | 37 | 38 | 17 | 18 | 19 |
| Resin composition | Epoxy resin A | 3,4'-TGDDE | 90 | 70 | 50 | 70 | 70 | | | |
| | Epoxy resin B | TG-pAP | 10 | 30 | 50 | | | | 30 | 30 |
| | | TG-mAP | | | | 30 | | | | |
| | Other epoxy resins | TGDDM | | | | | | 70 | 70 | |
| | | 4,4'-TGDDE | | | | | | | | 70 |
| | | DGEBA | | | | | 30 | 30 | | |
| | Curing agent | 3,3'-DDS | 50.1 | 51.5 | 52.9 | 50.1 | 44 | 50.2 | 51.2 | 53.1 |
| Characteristics | DMA-Tg (oC) | | 230 | 225 | 215 | 220 | 203 | 208 | 231 | 225 |
| | Bending elastic modulus (GPa) | | 4.7 | 4.5 | 4.3 | 4.8 | 3.9 | 3.7 | 4.1 | 4.1 |

[Table 7]

| | | | Example | | | | | | Comparative Example | | | |
|---|---|---|---|---|---|---|---|---|---|---|---|---|
| | | | 39 | 40 | 41 | 42 | 43 | 44 | 20 | 21 | 22 | 23 |
| Resin composition | Epoxy resin A | 3,4'-TGDDE | 90 | 70 | 50 | 70 | 70 | 100 | | | | |
| | Epoxy resin B | TG-pAP | 10 | 30 | 50 | | | | | 30 | 30 | |
| | | TG-mAP | | | | 30 | | | | | | |
| | Other epoxy resins | TGDDM | | | | | | | 70 | 70 | | 100 |
| | | 4,4'-TGDDE | | | | | | | | | 70 | |
| | | DGEBA | | | | | 30 | | 30 | | | |
| | Curing agent | 3,3'-DDS | 50.1 | 51.5 | 52.9 | 50.1 | 44 | 49.4 | 50.2 | 51.2 | 53.1 | 56.8 |
| | Epoxy resin-soluble thermoplastic resin | PES | 33.6 | 33.9 | 34.3 | 33.6 | 32.3 | 33.5 | 32.3 | 33.9 | 34.3 | 33.5 |
| | Epoxy resin-insoluble thermoplastic resin | PA12 | 36 | 36.4 | 36.7 | 36.0 | 34.6 | 35.9 | 34.6 | 36.3 | 36.8 | 35.9 |
| Characteristics | CAI-30.5J(MPa) | | 339 | 337 | 331 | 341 | 300 | 341 | 291 | 325 | 323 | 333 |
| | G1c ($J/m^2$) | | 665 | 648 | 613 | 683 | 700 | 683 | 573 | 438 | 455 | 462 |
| | G2c ($J/m^2$) | | 2154 | 2119 | 2105 | 2189 | 1926 | 2171 | 1893 | 1996 | 1944 | 1968 |
| | OHC (MPa) | | 351 | 345 | 339 | 354 | 310 | 355 | 293 | 331 | 329 | 341 |
| | Resin impregnation properties | | ○ | ○ | ○ | ○ | ○ | × | ○ | ○ | ○ | × |
| | Tack properties | | ○ | ○ | ○ | ○ | ○ | × | ○ | ○ | ○ | × |

[Table 8]

| | | | Example | | | |
|---|---|---|---|---|---|---|
| | | | 45 | 46 | 47 | 48 |
| Resin composition | Epoxy resin A | 3,4'-TGDDE | 90 | 70 | 50 | 70 |
| | Epoxy resin B | TG-pAP | 10 | 30 | 50 | |
| | | TG-mAP | | | | 30 |
| | Other epoxy resins | TGDDM | | | | |
| | | 4,4'-TGDDE | | | | |
| | | DGEBA | | | | |
| | Curing agent | 3,3'-DDS | 50.1 | 51.5 | 52.9 | 50.1 |
| | Epoxy resin-soluble thermoplastic resin | PES | 33.6 | 33.9 | 34.3 | 33.6 |
| | Epoxy resin-insoluble thermoplastic resin | PA12 | 36 | 36.4 | 36.7 | 36.0 |
| Characteristics | CAI-30.5J(MPa) | | 335 | 337 | 331 | 341 |
| | G1c (J/m$^2$) | | 679 | 692 | 631 | 695 |
| | G2c (J/m$^2$) | | 2234 | 2160 | 2138 | 2253 |
| | OHC (MPa) | | 363 | 352 | 342 | 361 |
| | Resin impregnation properties | | ○ | ○ | ○ | ○ |
| | Tack properties | | ○ | ○ | ○ | ○ |

[Examples 49 to 52, Comparative Example 24]

An epoxy resin composition was obtained by mixing the components described in Table 9 using a stirrer. Next, the carbon fiber multiaxial woven fabric 1 and the carbon fiber multiaxial woven fabric 2 were cut into a size of 300 x 300 mm, and 3 sheets of the cut carbon fiber multiaxial woven fabrics 1 and 3 sheets of the cut carbon fiber multiaxial woven fabrics 2 in total of 6 sheets were laminated on an aluminum plate of 500 x 500 mm subjected to a release treatment to prepare a laminate.

Further, on the laminate, a peel cloth, namely, Release ply C (manufactured by Airtech International, Inc.), which is a substrate provided with a release function, and a resin diffusing substrate, namely, Resin Flow 90HT (manufactured by Airtech International, Inc.) were laminated. Subsequently, hoses are disposed for forming a resin injection port and a resin discharge port, the whole laminate was covered with a nylon bag film and sealed with a sealant tape, and the inside of the nylon bag film was vacuumed. Next, after the aluminum plate was heated to 120°C and the pressure of the inside of the bag was reduced to 5 torr or less, the above epoxy resin composition heated to 100°C was injected into the vacuum system through the resin injection port.

The temperature was increased to 180°C in a state where the injected epoxy resin composition filled the bag and the laminate is impregnated with the epoxy resin composition, and this state was maintained at 180°C for 2 hours to obtain a carbon fiber composite material. The volume content of the carbon fiber was 54%.

A molded product of the obtained composite material was cut into a size of 38.1 mm in width x 304.8 mm in length and a hole having a diameter of 6.35 mm was made by drilling in the center of the test piece to obtain a test piece for the open hole compression (OHC) test. The test was performed in accordance with SACMA SRM3, and the results of calculating the open hole compression from the maximum point load are shown in Table 9.

Examples 49 to 52 all exhibited the higher OHC physical properties than Comparative Example 24.

[Table 9]

| | | | Example | | | | Comparative Example |
|---|---|---|---|---|---|---|---|
| | | | 49 | 50 | 51 | 52 | 24 |
| Resin composition | Epoxy resin A | 3,4'-TGDDE | 50 | 44 | 50 | 50 | |
| | Epoxy resin D | TG-pAP | | 15 | 5 | 10 | 10 |
| | Other epoxy resins | GAN | | 25 | | | |
| | | GOT | 35 | | 30 | 25 | 25 |
| | | TGDDM | 15 | 16 | 15 | 15 | 65 |
| | Curing agent B | M-MIPA | 40 | 41 | 40 | 41 | 41 |
| Resin cured product physical properties | Bending elastic modulus (GPa) | | 3.7 | 3.7 | 3.6 | 3.6 | 3.5 |
| CFRP physical properties | OHC (MPa) | | 310 | 312 | 310 | 308 | 298 |

**Claims**

1. An epoxy resin composition comprising an epoxy resin [A] represented by the following Chemical Formula (1),

[Chemical Formula 1]

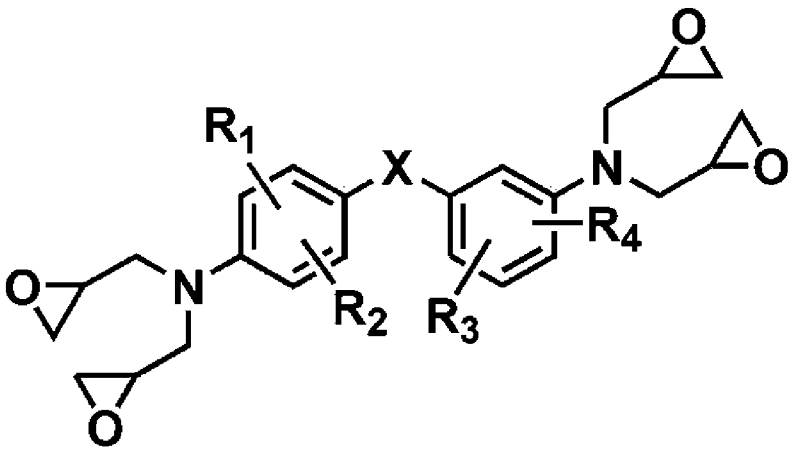

Chemical Formula (1)

wherein $R_1$ to $R_4$ each independently represent one selected from a group consisting of a hydrogen atom, an aliphatic hydrocarbon group, an alicyclic hydrocarbon group, and a halogen atom and X represents one selected from $-CH_2-$, -O-, - S-, -CO-, -C(=O)O-, -O-C(=O)-, -NHCO-, -CONH-, and $-SO_2-$.

2. An epoxy resin composition comprising:
an epoxy resin [A] represented by the following Chemical Formula (1),

[Chemical Formula 1]

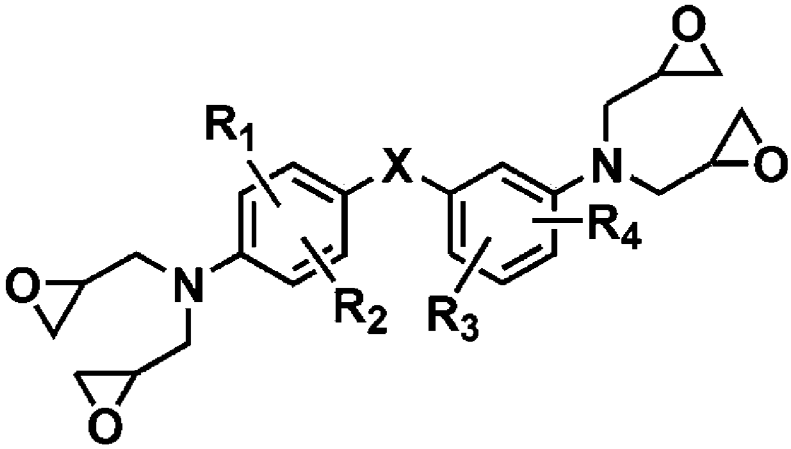

Chemical Formula (1)

wherein $R_1$ to $R_4$ each independently represent one selected from a group consisting of a hydrogen atom, an aliphatic hydrocarbon group, an alicyclic hydrocarbon group, and a halogen atom and X represents one selected from $-CH_2-$, -O-, - S-, -CO-, -C(=O)O-, -O-C(=O)-, -NHCO-, -CONH-, and $-SO_2-$; and
a curing agent [B] which is a curing agent composed of an aromatic polyamine, wherein the aromatic polyamine has a substituent of any of an aliphatic substituent, an aromatic substituent, and a halogen atom in at least one ortho position with respect to an amino group.

3. The epoxy resin composition according to claim 2, wherein the curing agent [B] is the curing agent composed of the aromatic polyamine and the aromatic polyamine has the aliphatic substituent in at least one ortho position with respect to the amino group.

4. The epoxy resin composition according to claim 2 or 3, wherein the curing agent [B] is a 4,4'-diaminodiphenylmethane derivative.

5. The epoxy resin composition according to claim 2 or 3, wherein the curing agent [B] is a phenylenediamine derivative.

6. An epoxy resin composition comprising:

an epoxy resin [A]
represented by the following Chemical Formula (1), [Chemical Formula 1]

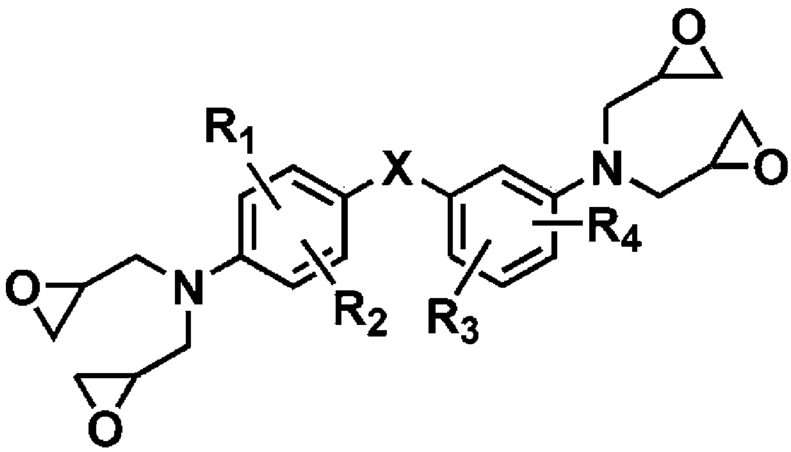

Chemical Formula (1)

wherein $R_1$ to $R_4$ each independently represent one selected from a group consisting of a hydrogen atom, an aliphatic hydrocarbon group, an alicyclic hydrocarbon group, and a halogen atom and X represents one selected from $-CH_2-$, -O-, - S-, -CO-, -C(=O)O-, -O-C(=O)-, -NHCO-, -CONH-, and $-SO_2-$; and
an epoxy resin [C] which is an aromatic epoxy resin having a glycidyl ether group, wherein the aromatic

epoxy resin has a ratio of the number of glycidyl ethers/the number of aromatic rings of 2 or more.

**7.** The epoxy resin composition according to claim 6, wherein the epoxy resin [C] is resorcinol diglycidyl ether.

**8.** The epoxy resin composition according to claim 6 or 7, wherein a mass ratio between the epoxy resin [A] and the epoxy resin [C] is from 2:8 to 9:1.

**9.** An epoxy resin composition comprising:

an epoxy resin [A]
represented by the following Chemical Formula (1),

[Chemical Formula 1]

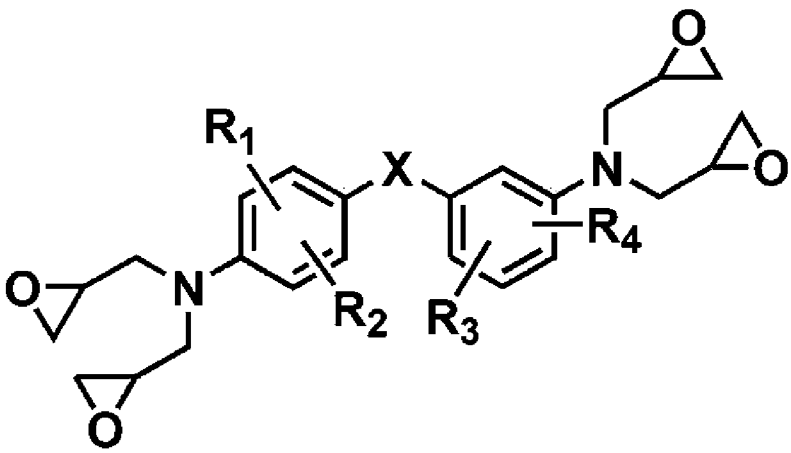

Chemical Formula (1)

wherein $R_1$ to $R_4$ each independently represent one selected from a group consisting of a hydrogen atom, an aliphatic hydrocarbon group, an alicyclic hydrocarbon group, and a halogen atom and X represents one selected from $-CH_2-$, -O-, - S-, -CO-, -C(=O)O-, -O-C(=O)-, -NHCO-, -CONH-, and $-SO_2-$; and
an epoxy resin [D] having an epoxy equivalent weight of 110 g/eq or less.

**10.** The epoxy resin composition according to claim 9, wherein the epoxy resin [D] is a trifunctional epoxy resin.

**11.** The epoxy resin composition according to claim 9 or 10, wherein the epoxy resin [D] is a triglycidyl aminophenol derivative.

**12.** The epoxy resin composition according to any one of claims 9 to 11, wherein a content of the epoxy resin [A] is from 20 to 95% by mass with respect to a total amount of the epoxy resins and a content of the epoxy resin [D] is from 5 to 80% by mass with respect to the total amount of the epoxy resins.

**13.** The epoxy resin composition according to any one of claims 1 to 12, wherein the epoxy resin [A] is tetraglycidyl-3,4'-diaminodiphenyl ether.

**14.** A prepreg comprising:

a fiber-reinforced substrate; and
the epoxy resin composition according to any one of claims 1 to 13, with which the fiber-reinforced substrate is impregnated.

**15.** The prepreg according to claim 14, wherein the reinforcing fiber substrate is formed from a carbon fiber.

**16.** A method for producing a prepreg, wherein a reinforcing fiber substrate is impregnated with the epoxy resin composition according to any one of claims 1 to 13.

**17.** A fiber-reinforced composite material including a resin cured product prepared by curing the epoxy resin composition according to any one of claims 1 to 13 and a fiber-reinforced substrate.

**18.** A method for producing a fiber-reinforced composite material, wherein a fiber-reinforced substrate and the epoxy resin composition according to any one of claims 1 to 13 are composited and cured.

**19.** A method for producing a fiber-reinforced composite material, wherein the prepreg according to claim 14 or 15 is cured.

**20.** A method for producing a fiber-reinforced composite material, wherein the prepreg according to claim 14 or 15 is laminated and heated at a pressure of from 0.05 to 2 MPa and a temperature of from 150 to 210°C for from 1 to 8 hours.

## INTERNATIONAL SEARCH REPORT

International application No.
PCT/JP2019/010715

A. CLASSIFICATION OF SUBJECT MATTER
Int.Cl. C08G59/32(2006.01)i, C08J5/24(2006.01)i
According to International Patent Classification (IPC) or to both national classification and IPC

B. FIELDS SEARCHED
Minimum documentation searched (classification system followed by classification symbols)
Int.Cl. C08G59/32, C08J5/24

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2-169618 A (SUMITOMO CHEMICAL INDUSTRY COMPANY LIMITED) 29 June 1990, claims, page 1, lower right column, line 16 to page 2, upper left column, line 10, page 2, upper right column, line 10 to lower left column, line 9, page 3, upper right column, lines 4-16, examples (Family: none) | 1, 13-20<br>2-12 |

☒ Further documents are listed in the continuation of Box C.
☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
24 May 2019 (24.05.2019)

Date of mailing of the international search report
04 June 2019 (04.06.2019)

Name and mailing address of the ISA/
Japan Patent Office
3-4-3, Kasumigaseki, Chiyoda-ku,
Tokyo 100-8915, Japan

Authorized officer

Telephone No.

Form PCT/ISA/210 (second sheet) (January 2015)

**INTERNATIONAL SEARCH REPORT**

International application No.
PCT/JP2019/010715

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | WO 2011/118106 A1 (TORAY INDUSTRIES, INC.) 29 September 2011, claims, paragraphs [0001], [0011], [0032], [0038]-[0059], [0063]-[0067], [0079]-[0084], [0101] & US 2013/0005855 A1, claims, paragraphs [0001], [0015], [0043], [0049]-[0070], [0074]-[0078], [0090]-[0095], [0131] & EP 2551288 A1 & CN 102822227 A & KR 10-2013-0018698 A | 1, 13-20<br>2-12 |
| Y<br>A | JP 2017-8316 A (TORAY INDUSTRIES, INC.) 12 January 2017, claims, paragraphs [0009], [0027], [0028] & US 2018/0186946 A1, claims, paragraphs [0045], [0097], [0098] & EP 3315530 A1 & CN 107709399 A & KR 10-2018-0022778 A | 2-5<br>1, 6-20 |
| Y<br>A | WO 2016/148175 A1 (TORAY INDUSTRIES, INC.) 22 September 2016, claims, paragraphs [0006], [0013] & US 2018/0051125 A1, claims, paragraphs [0012], [0028] & EP 3272781 A1 & CN 107250200 A & KR 10-2017-0129098 A | 6-8<br>1-5, 9-20 |
| Y<br>A | JP 2011-57736 A (TOHO TENAX CO., LTD.) 24 March 2011, claims, paragraphs [0001], [0025], [0026] (Family: none) | 9-12<br>1-8, 13-20 |
| A | JP 2014-148572 A (MITSUBISHI RAYON CO., LTD.) 21 August 2014 (Family: none) | 1-20 |
| A | JP 2017-119813 A (TORAY INDUSTRIES, INC.) 06 July 2017 & US 2018/0186946 A1 & EP 3315530 A1 & CN 107709399 A & KR 10-2018-0022778 A | 1-20 |
| A | JP 62-183340 A (SUMITOMO CHEMICAL INDUSTRY COMPANY LIMITED) 11 August 1987 & US 4900848 A & EP 217657 A2 | 1-20 |
| A | JP 2003-26768 A (TORAY INDUSTRIES, INC.) 29 January 2003 (Family: none) | 1-20 |

Form PCT/ISA/210 (continuation of second sheet) (January 2015)

**INTERNATIONAL SEARCH REPORT**

International application No.
PCT/JP2019/010715

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:
See extra sheet

1. ☒ As all required additional search fees were timely paid by the applicant, this international search report covers all searchable claims.
2. ☐ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (January 2015)

**INTERNATIONAL SEARCH REPORT**

International application No. PCT/JP2019/010715

<Continuation of Box No. III>

Document 1: JP 2-169618 A (SUMITOMO CHEMICAL INDUSTRY COMPANY LIMITED) 29 June 1990, claims, page 1, lower right column, line 16 to page 2, upper left column, line 10, page 2, upper right column, line 10 to lower left column, line 9, page 3, upper right column, lines 4-16, examples (Family: none)
Document 2: WO 2011/118106 A1 (TORAY INDUSTRIES, INC.) 29 September 2011, claims, paragraphs [0001], [0011], [0032], [0038]-[0059], [0063]-[0067], [0079]-[0084], [0101] & US 2013/0005855 A1, claims, paragraphs [0001], [0015], [0043], [0049]-[0070], [0074]-[0078], [0090]-[0095], [0131] & EP 2551288 A1 & CN 102822227 A & KR 10-2013-0018698 A

The claims are classified into the four inventions below.

(Invention 1) Claim 1 and claims 13-20 (parts pertaining to the epoxy resin composition of claim 1)

Document 1 discloses an epoxy resin composition having an N,N,N',N'-tetraglycidyl-3,4'-diaminodiphenylether or a derivative thereof as a main component, and a carbon fiber-reinforced composite material having an epoxy resin composition as a matrix, and also discloses a method in which an epoxy resin composition is made into a sheet in a semi-cured state, a semi-melted epoxy resin composition sheet is superimposed, compressed, and impregnated on a sheet-shaped material or woven fabric, in which a large number of reinforcing fibers are aligned in parallel, to obtain a prepreg, and the prepreg is molded into a predetermined shape by an autoclave method. Document 2 discloses an epoxy resin composition for a carbon fiber-reinforced composite material, the epoxy resin composition containing element [A], which is tetraglycidyl-3,4'-diaminodiphenyether, a prepreg obtained by impregnating the epoxy resin composition into the carbon fiber, and a carbon fiber-reinforced composite material obtained by curing the prepreg, and also indicates that a resin film is prepared by coating the epoxy resin composition on release paper, etc., the resin film is the laminated from both sides or one side of the reinforcing fiber, the epoxy resin composition is transferred and impregnated by heating and pressing to obtain prepregs, the plurality of prepregs are laminated to obtain a laminate, and the epoxy resin composition is heated and cured while applying heat and pressure to the obtained laminate by using an autoclave molding method or the like. Thus, claim 1 lacks novelty and does not have a special technical feature.

Claims 13-20 (parts pertaining to the epoxy resin composition of claim 1) are dependent on claim 1, and are inventively related to claim 1, and are thus classified as invention 1.

(Invention 2) Claims 2-5 and claims 13-20 (parts pertaining to the epoxy resin composition of claim 2)

Claims 2-5 cannot be said to have an identical or corresponding special technical feature to claim 1 classified as invention 1.

In addition, claims 2-5 are not dependent on claim 1. In addition, claims 2-5 are not substantially identical or equivalent to any of the claims classified as invention 1.

Thus, claims 2-5 cannot be classified as invention 1.

In addition, claims 2-5 have the special technical feature of an epoxy resin composition containing a specific curing agent [B], and are thus classified as invention 2.

Claims 13-20 (parts pertaining to the epoxy resin composition of claims 2-5) are dependent on claims 2-5, and are inventively related to claims 2-5, and are thus classified as invention 2.

INTERNATIONAL SEARCH REPORT

International application No. PCT/JP2019/010715

(Invention 3) Claims 6-8 and claims 13-20 (parts pertaining to the epoxy resin composition of claim 6)

Claims 6-8 cannot be said to have an identical or corresponding special technical feature to claim 1 classified as invention 1 and claims 2-5 classified as invention 2.

In addition, claims 6-8 are not dependent on claim 1 and claims 2-5. In addition, claims 6-8 are not substantially identical or equivalent to any of the claims classified as inventions 1 and 2.

Thus, claims 6-8 cannot be classified as invention 1 or 2.

In addition, claims 6-8 have the special technical feature of an epoxy resin composition containing a specific epoxy resin [C], and are thus classified as invention 3.

Claims 13-20 (parts pertaining to the epoxy resin composition of claims 6-8) are dependent on claims 6-8, and are inventively related to claims 6-8, and are thus classified as invention 3.

(Invention 4) Claims 9-12 and claims 13-20 (parts pertaining to the epoxy resin composition of claim 9)

Claims 9-12 cannot be said to have an identical or corresponding special technical feature to claim 1 classified as invention 1, claims 2-5 classified as invention 2, and claims 6-8 classified as invention 3.

In addition, claims 9-12 are not dependent on claim 1, claims 2-5, and claims 6-8.

In addition, claims 9-12 are not substantially identical or equivalent to any of the claims classified as inventions 1-3.

Thus, claims 9-12 cannot be classified as any of inventions 1-3.

In addition, claims 9-12 have the special technical feature of an epoxy resin composition containing a specific epoxy resin [D], and are thus classified as invention 4.

Claims 13-20 (parts pertaining to the epoxy resin composition of claims 9-12) are dependent on claims 9-12, and are inventively related to claims 9-12, and are thus classified as invention 4.

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 200448435 A
- JP 2005213352 A
- JP 2009292976 A
- JP 2009292977 A
- JP 2010248379 A
- JP 2011190430 A
- JP 60243113 A
- JP H0741575 A
- JP H0741576 A
- JP H0741577 A
- JP 2014148572 A